(19) Europäisches Patentamt / European Patent Office / Office européen des brevets

(11) **EP 4 498 557 A1**

(12) **EUROPÄISCHE PATENTANMELDUNG**

(43) Veröffentlichungstag:
**29.01.2025 Patentblatt 2025/05**

(21) Anmeldenummer: **23187199.7**

(22) Anmeldetag: **24.07.2023**

(51) Internationale Patentklassifikation (IPC):
*H02J 3/28* (2006.01)     *H02J 3/32* (2006.01)
*H02J 3/46* (2006.01)

(52) Gemeinsame Patentklassifikation (CPC):
**H02J 3/32; H02J 3/28; H02J 3/466;** H02J 2203/20;
H02J 2310/64

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Primetals Technologies Germany GmbH**
**91058 Erlangen (DE)**

(72) Erfinder: **Weinzierl, Klaus**
**90480 Nürnberg (DE)**

(74) Vertreter: **Metals@Linz**
**Primetals Technologies Austria GmbH**
**Intellectual Property Upstream IP UP**
**Turmstraße 44**
**4031 Linz (AT)**

(54) **KOSTENEFFIZIENTER BETRIEB EINER ANLAGE DER METALLINDUSTRIE UND WEITERER TEILSYSTEME EINES DIE ANLAGE UMFASSENDEN GESAMTSYSTEMS**

(57) Ein Gesamtsystem umfasst einen elektrischen Energiespeicher (6) und weitere Teilsysteme (1, 4 usw.), darunter eine Anlage (1) der Metallindustrie. Die Anlage (1) und der Energiespeicher (6) sind zur Übertragung elektrischer Energie miteinander und mit einem elektrischen Versorgungsnetz (2) verbunden. Einer Steuereinrichtung (9) sind vor dem Beginn eines ersten Zeithorizonts (T1) Anfangszustände (Z1, Z4 usw.) der Teilsysteme (1, 4 usw.) bekannt, welche zu Beginn des ersten Zeithorizonts (T1) zu erwarten sind. Der Steuereinrichtung (9) sind weiterhin vor dem Beginn des ersten Zeithorizonts (T1) für den ersten Zeithorizont (T1) ein geplanter erster zeitlicher Verlauf (E1) des Bezugs an elektrischer Energie aus dem Versorgungsnetz (2) und geplante erste Betriebsweisen (B1, B4 usw.) der weiteren Teilsysteme (1, 4 usw.) bekannt. Die Steuereinrichtung (9) ermittelt basierend auf dem Anfangszustand (Z6) des Energiespeichers (6), dem geplanten ersten zeitlichen Verlauf (E1) und den geplanten ersten Betriebsweisen (B1, B4 usw.) einen für das Ende des ersten Zeithorizonts (T1) erwarteten Endzustand (Z6') des Energiespeichers (6). Die Steuereinrichtung (9) ermittelt, ausgehend vom erwarteten Endzustand (Z6') und ihr bekannter, für einen sich an den ersten Zeithorizont (T1) unmittelbar anschließenden zweiten Zeithorizont (T2) geplanter zweiter Betriebsweisen (B1', B4' usw.) der weiteren Teilsysteme (1, 4 usw.) für den zweiten Zeithorizont (T2) mögliche zweite zeitliche Verläufe (E2) des Bezugs an elektrischer Energie, die jeweils bezüglich mehrerer von vom jeweiligen zweiten zeitlichen Verlauf (E2) abhängiger Kostenfunktionen (K1, K2) pareto-optimal sind. Einen dieser zweiten zeitlichen Verläufe (E2) legt die Steuereinrichtung (9) vor dem Beginn des ersten Zeithorizonts (T1) als zweiten zeitlichen Verlauf (E2) des Bezugs an elektrischer Energie fest. Die Steuereinrichtung (9) betreibt, soweit möglich, während der Zeithorizonte (T1, T2) die weiteren Teilsysteme (1, 4 usw.) basierend auf den geplanten ersten und zweiten Betriebsweisen (B1, B4 usw., B1', B4' usw.) und betreibt den elektrischen Energiespeicher (6) derart, dass sich der Bezug an elektrischer Energie aus dem Versorgungsnetz (2) während der Zeithorizonte (T1, T2) gemäß des geplanten ersten und des festgelegten zweiten zeitlichen Verlaufs (E1, E2) ergibt.

FIG 1

**Beschreibung**

Gebiet der Technik

Die vorliegende Erfindung geht aus von einem Betriebsverfahren für ein Gesamtsystem,

- wobei das Gesamtsystem als ein Teilsystem einen elektrischen Energiespeicher und weitere Teilsysteme umfasst,
- wobei die weiteren Teilsysteme eine Anlage der Metallindustrie umfassen,
- wobei die Anlage der Metallindustrie und der elektrische Energiespeicher zur Übertragung elektrischer Energie direkt oder indirekt miteinander und mit einem elektrischen Versorgungsnetz verbunden sind,
- wobei einer das Gesamtsystem steuernden Steuereinrichtung vor dem Beginn eines ersten Zeithorizonts Anfangszustände der Teilsysteme bekannt sind, welche für die Teilsysteme zu Beginn des ersten Zeithorizonts zu erwarten sind.

Die vorliegende Erfindung geht weiterhin aus von einem Steuerprogramm für eine Steuereinrichtung für ein Gesamtsystem,

- wobei das Gesamtsystem als ein Teilsystem einen elektrischen Energiespeicher und weitere Teilsysteme umfasst,
- wobei die weiteren Teilsysteme eine Anlage der Metallindustrie umfassen,
- wobei die Anlage der Metallindustrie und der elektrische Energiespeicher zur Übertragung elektrischer Energie direkt oder indirekt miteinander und mit einem elektrischen Versorgungsnetz verbunden sind,
- wobei das Steuerprogramm Maschinencode umfasst, der von der Steuereinrichtung abarbeitbar ist,
- wobei die Abarbeitung des Maschinencodes durch die Steuereinrichtung bewirkt, dass die Steuereinrichtung das Gesamtsystem gemäß einem derartigen Betriebsverfahren steuert.

Die vorliegende Erfindung geht weiterhin aus von einer Steuereinrichtung für ein Gesamtsystem,

- wobei das Gesamtsystem als ein Teilsystem einen elektrischen Energiespeicher und weitere Teilsysteme umfasst,
- wobei die weiteren Teilsysteme eine Anlage der Metallindustrie umfassen,
- wobei die Anlage der Metallindustrie und der elektrische Energiespeicher zur Übertragung elektrischer Energie direkt oder indirekt miteinander und mit einem elektrischen Versorgungsnetz verbunden sind,
- wobei die Steuereinrichtung mit einem derartigen Steuerprogramm programmiert ist, so dass die Steuereinrichtung bei Abarbeitung des Maschinencodes des Steuerprogramms das Gesamtsystem gemäß einem derartigen Betriebsverfahren steuert.

Die vorliegende Erfindung geht weiterhin aus von einem Gesamtsystem,

- wobei das Gesamtsystem als ein Teilsystem einen elektrischen Energiespeicher und weitere Teilsysteme umfasst,
- wobei die weiteren Teilsysteme eine Anlage der Metallindustrie umfassen,
- wobei die Anlage der Metallindustrie und der elektrische Energiespeicher zur Übertragung elektrischer Energie direkt oder indirekt miteinander und mit einem elektrischen Versorgungsnetz verbunden sind,
- wobei das Gesamtsystem eine derartige Steuereinrichtung umfasst, die bei Abarbeitung des Maschinencodes eines derartigen Steuerprogramms das Gesamtsystem gemäß einem derartigen Betriebsverfahren steuert.

Stand der Technik

Die genannten Gegenstände sind beispielsweise aus dem Aufsatz "Grüne Energieversorgung der Stahlindustrie", Stahl und Eisen, August 2022, Seiten 22 bis 24 bekannt.
Aus der KR 2019 0136300 A ist ein industrieller Prozess bekannt, dem ein Energiespeicher zugeordnet ist. Der industrielle Prozess kann ein mehr oder minder komplexer technischer Prozess sein, der mehrere aufeinander aufbauende und miteinander zusammenwirkende Teilprozesse umfasst. Der industrielle Prozess weist verschiedene Arten von Lasten auf, nämlich Lasten, die stets mit Energie versorgt werden müssen, Lasten, die abgeschaltet werden können, und Lasten, bei denen der Energieverbrauch einstellbar ist. Es wird der tatsächliche Energieverbrauch der verschiedenen Komponenten der industriellen Anlage bestimmt. Der Betrieb der industriellen Anlage und des Energiespeichers werden derart aufeinander abgestimmt, dass sich minimale Kosten ergeben.
Aus der US 10 354 297 B2 ist eine Anordnung mit einem häuslichen Verbraucher, einem Energieerzeuger und einem Energiespeicher bekannt. Der Betrieb des Energiespeichers kann unter Berücksichtigung eines geplanten Energieverbrauchs des Verbrauchers ermittelt werden. Weiterhin können auch Wetterdaten mit verwertet werden. Auch können Preisinformationen für das Beziehen elektrische Energie aus einem Versorgungsnetz und für das Einspeisen elektrischer Energie in das Versorgungsnetz berücksichtigt werden.

Aus der TW 201 235 124 A ist bekannt, dass der Energieverbrauch einer Anlage der Metallindustrie - konkret ist eine Walzstraße genannt - bei bekannter Betriebsweise der Anlage der Metallindustrie mit guter Genauigkeit vorhergesagt werden kann.

Zusammenfassung der Erfindung

In der Vergangenheit wurden bei der Ermittlung des Betriebs von Anlagen der Metallindustrie zwar die hierbei anfallenden Kosten - auch die hierbei anfallenden Energiekosten - berücksichtigt. Die Berücksichtigung erfolgte jedoch nur in dem Sinne, dass der Gesamtbedarf an elektrischer Energie und die dadurch entstehenden Kosten für die elektrische Energie berücksichtigt wurden. Im Zuge der Hinwendung zu regenerativen Energien muss in erheblich stärkerem Ausmaß die Verfügbarkeit elektrischer Energie (einschließlich der zeitlichen Schwankungen der für die elektrische Energie anfallenden Kosten) berücksichtigt werden, da die Verfügbarkeit und damit auch die Kosten elektrischer Energie zukünftig deutlich größeren Schwankungen als in der Vergangenheit unterworfen sein wird.

Entscheidend für die effiziente Verwendung des elektrischen Energiespeichers im Rahmen der vorliegenden Erfindung sind zum einen der - erwartete - zukünftige Strombedarf der Anlage der Metallindustrie und zum anderen der - erwartete - zukünftige Preis für aus dem Versorgungsnetz bezogene elektrische Energie.

In dem oben genannten Fachaufsatz ist zwar ausgeführt, dass die Anlage der Metallindustrie und der elektrische Energiespeicher mittels eines intelligenten Energiemanagementsystems gesteuert und betrieben werden. Es finden sich jedoch keine näheren Ausführungen zur Implementierung des intelligenten Energiemanagementsystems.

Die Aufgabe der vorliegenden Erfindung besteht darin, Möglichkeiten zu schaffen, mittels derer ein kosteneffizienter Betrieb eines Gesamtsystems erreicht wird, das als Teilsysteme eine Anlage der Metallindustrie und einen elektrischen Energiespeicher umfasst.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 10.

Erfindungsgemäß wird ein Betriebsverfahren der eingangs genannten Art dadurch ausgestaltet,

- dass der Steuereinrichtung vor dem Beginn des ersten Zeithorizonts für den ersten Zeithorizont ein geplanter erster zeitlicher Verlauf des Bezugs an elektrischer Energie aus dem Versorgungsnetz und geplante erste Betriebsweisen der weiteren Teilsysteme bekannt sind,
- dass die Steuereinrichtung basierend auf dem Anfangszustand des elektrischen Energiespeichers, dem geplanten ersten zeitlichen Verlauf des Bezugs an elektrischer Energie und den geplanten ersten Betriebsweisen der weiteren Teilsysteme einen für das Ende des ersten Zeithorizonts erwarteten Endzustand des elektrischen Energiespeichers ermittelt,
- dass die Steuereinrichtung, ausgehend vom erwarteten Endzustand des elektrischen Energiespeichers und der Steuereinrichtung bekannter, für einen sich an den ersten Zeithorizont unmittelbar anschließenden zweiten Zeithorizont geplanter zweiter Betriebsweisen der weiteren Teilsysteme für den zweiten Zeithorizont mögliche zweite zeitliche Verläufe des Bezugs an elektrischer Energie ermittelt,
- dass die Steuereinrichtung die möglichen zweiten zeitlichen Verläufe des Bezugs an elektrischer Energie derart ermittelt, dass sie jeweils bezüglich einer Mehrzahl von vom jeweiligen zweiten zeitlichen Verlauf des Bezugs an elektrischer Energie abhängigen jeweiligen Kostenfunktionen pareto-optimal sind,
- dass die Abhängigkeiten der Kostenfunktionen vom jeweiligen zweiten zeitlichen Verlauf des Bezugs an elektrischer Energie von Kostenfunktion zu Kostenfunktion unterschiedlich sind,
- dass die Steuereinrichtung einen der ermittelten möglichen zweiten zeitlichen Verläufe des Bezugs an elektrischer Energie für den zweiten Zeithorizont als zweiten zeitlichen Verlauf des Bezugs an elektrischer Energie festlegt,
- dass die Steuereinrichtung die Festlegung des zweiten zeitlichen Verlaufs des Bezugs an elektrischer Energie vor dem Beginn des ersten Zeithorizonts vornimmt,
- dass die Steuereinrichtung, soweit möglich, während des ersten und des zweiten Zeithorizonts die weiteren Teilsysteme basierend auf den geplanten ersten und zweiten Betriebsweisen betreibt und den elektrischen Energiespeicher derart betreibt, dass sich der Bezug an elektrischer Energie aus dem Versorgungsnetz während des ersten und zweiten Zeithorizonts gemäß des geplanten ersten und des festgelegten zweiten zeitlichen Verlaufs des Bezugs an elektrischer Energie ergibt.

Der Begriff "Teilsysteme" umfasst, wenn er ohne weitere Zusätze verwendet wird, sowohl vorstehend als auch nachstehend alle Teilsysteme, also sowohl den elektrischen Energiespeicher als auch die weiteren Teilsysteme. Der Begriff "weitere Teilsysteme" umfasst hingegen nur die anderen Teilsysteme, nicht aber den elektrischen Energiespeicher

Eine Anlage der Metallindustrie ist typischerweise eine Anlage der metallerzeugenden oder erzeugtes Metall unmittelbar verarbeitenden Industrie, also beispielsweise ein Lichtbogenofen, ein Konverter, eine Stranggießanlage und/oder ein Walzwerk.

Die Zustände der Teilsysteme können nach Bedarf definiert sein. Sie können insbesondere "normale" Betriebszustände ("wie wird das Teilsystem gerade betrieben"), Betriebsgrenzen ("was ist möglich und was nicht mehr") und Verschleißzustände umfassen.

Konkret für den elektrischen Energiespeicher umfasst der entsprechende Teilzustand insbesondere, in welchem Umfang (prozentual und/oder absolut) der Energiespeicher geladen ist und welche Temperatur Speicherzellen des Energiespeichers aufweisen. Weiterhin kann der entsprechende Teilzustand auch umfassen, in welchem Verschleißzustand sich der Energiespeicher oder Teile des Energiespeichers befinden. Der entsprechende Teilzustand kann weiterhin prinzipiell maximal mögliche und momentan maximal mögliche Betriebsgrößen umfassen, beispielsweise Lade- und Entladeströme. Dies gilt gleichermaßen für den Anfangszustand, den Endzustand und Zustände vor dem ersten Zeithorizont, während des ersten und des zweiten Zeithorizonts und nach dem zweiten Zeithorizont.

Es ist möglich, dass die Steuereinrichtung vor dem Beginn des ersten Zeithorizonts für den ersten Zeithorizont zunächst den geplanten ersten zeitlichen Verlauf des Bezugs an elektrischer Energie aus dem Versorgungsnetz festlegt und dann basierend auf diesem Verlauf die geplanten ersten Betriebsweisen der verschiedenen weiteren Teilsysteme festlegt. Alternativ ist die umgekehrte Vorgehensweise möglich. Wiederum alternativ ist es möglich, dass die geplanten ersten Betriebsweisen der weiteren Teilsysteme der Steuereinrichtung zuerst bekannt sind (beispielsweise weil sie der Steuereinrichtung vorgegeben werden oder von der Steuereinrichtung ermittelt werden) und die Steuereinrichtung sodann den ersten zeitlichen Verlauf des Bezugs an elektrischer Energie anhand der geplanten ersten Betriebsweisen ermittelt. In jedem Fall aber ist die geplante Betriebsweise des elektrischen Energiespeichers eine aus dem festgelegten ersten zeitlichen Verlauf des Bezugs an elektrischer Energie und der zugehörigen geplanten ersten Betriebsweisen der weiteren Teilsysteme abgeleitete Betriebsweise. Der elektrische Energiespeicher ist sozusagen der Sklave, der auf seine Herren hört, wobei die Herren die weiteren Teilsysteme und der festgelegte erste zeitliche Verlauf des Bezugs an elektrischer Energie aus dem Versorgungsnetz sind.

Sowohl der erste als auch der zweite Zeithorizont liegen in der Regel bei mehreren Stunden. Beispielsweise kann der erste Zeithorizont bei 12 Stunden liegen. Der zweite Zeithorizont kann beispielsweise bei 24 Stunden liegen. Die genannten Werte sind innerhalb der Europäischen Union (EU) typisch. Sie entsprechen dem typischen Sachverhalt, dass bis 12:00 Uhr eines bestimmten Tages an der Energiebörse die Gebote für Verträge für den gesamten Folgetag (also von 0:00 Uhr bis 24 Uhr des Folgetages) abgegeben sein müssen. Die vorliegende Erfindung ist jedoch nicht auf die genannten Werte für die beiden Zeithorizonte beschränkt.

Im einfachsten Fall setzt die Steuereinrichtung für die Ermittlung der jeweiligen möglichen zweiten zeitlichen Verläufe des Bezugs an elektrischer Energie nur zwei Kostenfunktionen an. Es ist aber ohne weiteres auch möglich, dass die Steuereinrichtung eine pareto-Optimierung für mehr als zwei Kostenfunktionen vornimmt. Der Begriff "pareto-optimal" selbst hat eine fest definierte Bedeutung, siehe beispielsweise den Eintrag "Pareto-Optimum" in der deutschen Wikipedia, abgerufen am 27.06.2023. Der Begriff "pareto-Optimierung" bedeutet im wesentlichen, dass Eingangsgrößen mit dem Ziel variiert werden, mehrere Kostenfunktionen zu minimieren. Das pareto-Optimum ist erreicht, wenn durch Variieren der Eingangsgrößen der Kostenfunktionen eine noch weitergehende Minimierung einer der Kostenfunktionen nur noch möglich ist, wenn eine andere der Kostenfunktionen einen größeren Wert annimmt.

Die vorliegende Erfindung beruht auf dem als solchen vorbekannten Sachverhalt, dass größere Mengen an elektrischer Energie häufig am Spotmarkt gekauft werden. Hierzu werden (in der EU und nach derzeitigem Stand, dies kann sich zukünftig natürlich ändern und in anderen Regionen der Welt auch anders sein) bis 12:00 Uhr eines bestimmten Tages in einer Auktion Preise für elektrische Energie festgelegt, die am Folgetag zur Verfügung gestellt wird bzw. abgenommen wird. Die Preise gelten jeweils für eine bestimmte Stunde des Folgetages. Die elektrische Energie kann beispielsweise 8:00 Uhr und 9:00 Uhr einen anderen Preis haben als beispielsweise zwischen 12:00 Uhr und 13:00 Uhr.

Die ausgehandelten Preise gelten jedoch lediglich, wenn auch tatsächlich die vereinbarte Menge an elektrischer Energie abgenommen wird. Weiterhin wird - zumindest innerhalb der EU - in der Regel zusätzlich vereinbart, dass die für die jeweilige Stunde insgesamt vereinbarte Menge an elektrischer Energie in den vier Viertelstunden der entsprechenden Stunde zu gleichen Teilen abgenommen werden muss. Ist dies nicht der Fall, weicht also der tatsächliche Bezug an elektrischer Energie während der genannten Viertelstunden von dem vereinbarten Bezug an elektrischer Energie ab, so gilt ein anderer Preis. Dieser andere Preis ist jedoch nicht nur nicht vorab vereinbart, sondern steht schlichtweg auch noch nicht fest. In den anderen Preis geht insbesondere ein, ob und gegebenenfalls mit welchem Aufwand der Betreiber des Versorgungsnetzes zusätzlich bezogene elektrische Energie beschaffen muss oder ob und gegebenenfalls mit welchem Aufwand der Betreiber des Versorgungsnetzes gekaufte, aber nicht bezogene elektrische Energie anderweitig verwerten kann. Der genannte andere Preis kann daher erheblich von dem eigentlich vereinbarten Preis abweichen.

Dies schafft in erheblichem Umfang Unsicherheiten für den Betreiber des Gesamtsystems. Erheblich zuverlässiger wäre es, wenn gewährleistet werden könnte, dass beim späteren Betrieb des Gesamtsystems aus dem Versorgungsnetz auch tatsächlich die zuvor gekaufte Menge an elektrischer Energie, aber nicht mehr und auch nicht weniger, bezogen wird. Zum Reduzieren dieser Unsicherheiten werden - sowohl im Stand der Technik als auch bei der vorliegenden Erfindung - elektrische Energiespeicher eingesetzt. Derartige Energiespeicher können Schwankungen ausgleichen, so dass aus dem Versorgungsnetz tatsächlich die zuvor georderte Menge an elektrischer Energie bezogen werden kann. Genau dies wird durch die erfindungsgemäße Vorgehensweise in exzellenter Art und Weise gewährleistet. Hierbei wird aufgrund der pareto-Optimierung einerseits nicht nur ein einzelnes Optimum ermittelt, sondern die gesamte Menge an möglichen Optima (oder zumindest ein repräsentativer Teil der gesamten Menge). Dadurch wird die Möglichkeit geschaffen, aus der Menge an möglichen Optima das bevorzugte Optimum auszuwählen. Eine derartige Auswahl kann - beispielsweise - von einer Bedienperson aufgrund ihres Erfahrungsschatzes vorgenommen werden.

In einer bevorzugten Ausgestaltung umfassen die Kostenfunktionen eine erste Kostenfunktion, deren Wert von Kosten des Betriebs des elektrischen Energiespeichers während des zweiten Zeithorizonts ohne Berücksichtigung von Kosten für den Bezug an elektrischer Energie abhängig ist. Die erste Kostenfunktion spiegelt in diesem Fall den Preis für den Betrieb des elektrischen Energiespeichers als solchen wider, also die Kosten aufgrund einer Abschreibung bzw. Amortisation eines Verschleißes, einer Wartung usw.

Es ist möglich, dass die Steuereinrichtung die ermittelten möglichen zweiten zeitlichen Verläufe des Bezugs an elektrischer Energie einer Bedienperson des Gesamtsystems zum Auswählen anbietet und von der Bedienperson eine Auswahl mindestens eines der angebotenen möglichen zweiten zeitlichen Verläufe des Bezugs an elektrischer Energie entgegennimmt. In diesem Fall bestimmt die Auswahl der Bedienperson die Festlegung des zweiten zeitlichen Verlaufs des Bezugs an elektrischer Energie. Alternativ ist es im Falle einer derartigen Kostenfunktion jedoch möglich und oftmals sogar vorzuziehen, dass die Steuereinrichtung zum Festlegen des zweiten zeitlichen Verlaufs des Bezugs an elektrischer Energie

- über das Internet an einer Energiebörse für eine Anzahl von Abschnitten des zweiten Zeithorizonts jeweils eine Anzahl an Anforderungen für den Bezug jeweiliger Mengen an elektrischer Energie abgibt, wobei den Anforderungen jeweilige Bedingungen zugeordnet sind,
- prüft, ob und gegebenenfalls für welche der Anforderungen der angeforderte Bezug an elektrischer Energie unter Erfüllung der jeweils zugeordneten Bedingungen von der Energiebörse zugesagt wird, und
- sodann den zweiten zeitlichen Verlauf des Bezugs an elektrischer Energie unter Berücksichtigung derjenigen Anforderungen bestimmt, bei denen der gewünschte Bezug an elektrischer Energie unter Erfüllung der jeweils zugeordneten Bedingungen von der Energiebörse zugesagt wird.

Die Anforderungen können insbesondere Preise sein, welche der Betreiber des Gesamtsystems zu zahlen bereit ist. Die Bedienperson kann also beispielsweise mehrere von der Steuereinrichtung ermittelte, jeweils pareto-optimale zweite zeitliche Verläufe des Bezugs an elektrischer Energie auswählen und für die zugehörigen Verläufe entsprechende Gebote an einer Energiebörse abgeben. Der letztendlich festgelegte zweite zeitliche Verlauf des Bezugs an elektrischer Energie ist in diesem Fall derjenige zeitliche Verlauf, dessen Gebot gerade noch erfüllt wird. Die endgültige Festlegung erfolgt also nach dem Motto "wenn du die Strommenge X zum Preis Y bekommst, dann nimm Lösung A; wenn du die Strommenge X zum Preis Z bekommst, dann nimm Lösung B".

Alternativ ist es möglich, dass die Kostenfunktionen eine erste Kostenfunktion umfassen, deren Wert von Kosten des Betriebs des elektrischen Energiespeichers während des zweiten Zeithorizonts und Kosten für den Bezug an elektrischer Energie abhängig ist. In diesem Fall muss für den zweiten Zeithorizont ein zeitlicher Verlauf für den erwarteten Preis für den Bezug elektrischer Energie bekannt sein oder aufgrund einer Schätzung angesetzt werden. Der Preis kann gegebenenfalls zusätzlich auch von der während einer bestimmten Zeiteinheit bezogenen Menge an elektrischer Energie abhängen. Weiterhin wird in diesem Fall in der Regel die Steuereinrichtung die ermittelten möglichen zweiten zeitlichen Verläufe des Bezugs an elektrischer Energie einer Bedienperson des Gesamtsystems zum Auswählen anbieten und von der Bedienperson eine Auswahl mindestens eines der angebotenen möglichen zweiten zeitlichen Verläufe des Bezugs an elektrischer Energie entgegennehmen. Hierbei wird die Bedienperson in der Regel nur einen einzigen pareto-optimalen zweiten zeitlichen Verlauf auswählen.

In einer bevorzugten Ausgestaltung umfassen die Kostenfunktionen eine zweite Kostenfunktion, deren Wert vom zeitlichen Verlauf eines Ladezustands des elektrischen Energiespeichers während des zweiten Zeithorizonts abhängig ist. Die zweite Kostenfunktion ergibt vom Ansatz her vorzugsweise einen Wert für die mögliche Reserve des elektrischen Energiespeichers während des zweiten Zeithorizonts. Die Reserve nach oben (wie viel Energie der elektrische Energiespeicher also bei Bedarf noch aufnehmen kann) und die Reserve nach unten (wie viel Energie der elektrische Energiespeicher bei Bedarf also abgeben kann) können gegebenenfalls unabhängig voneinander ermittelt oder in voneinander unabhängiger Wichtung zu einem gemeinsamen Wert zusammengefasst werden.

Vorzugsweise erfüllen die möglichen zweiten zeitlichen Verläufe des Bezugs an elektrischer Energie einheitliche Nebenbedingungen. Dadurch wird gewährleistet, dass die aufgefundenen Lösungen, also die möglichen zweiten zeitlichen Verläufe, zulässig sind.

Die Nebenbedingungen können beispielsweise einen minimal geforderten Ladezustand, einen maximal geforderten Ladezustand und/oder einen maximalen Ladestrom des elektrischen Energiespeichers umfassen. Auch können die Nebenbedingungen einen bestimmten Ladezustand oder einen bestimmten Bereich innerhalb des prinzipiell zulässigen Ladezustands) umfassen, welchen der Energiespeicher am Ende des zweiten Zeithorizonts aufweisen soll.

Vorzugsweise geht die Steuereinrichtung zum Ermitteln eines jeweiligen möglichen zweiten zeitlichen Verlaufs des Bezugs an elektrischer Energie so vor, dass sie

- für den zweiten Zeithorizont einen zweiten zeitlichen Verlauf des Bezugs an elektrischer Energie ansetzt und für den angesetzten zweiten zeitlichen Verlauf die Werte der Kostenfunktionen und die Gradienten der Kostenfunktionen ermittelt,
- anhand der Gesamtheit der Gradienten entscheidet, ob der angesetzte zweite zeitliche Verlauf pareto-optimierbar ist oder nicht,
- in dem Fall, dass der angesetzte zweite zeitliche Verlauf nicht pareto-optimierbar ist, den angesetzten zweiten zeitlichen Verlauf als möglichen zweiten zeitlichen Verlauf übernimmt und
- in dem Fall, dass der angesetzte zweite zeitliche Verlauf pareto-optimierbar ist, unter Verwertung der Gradienten der Kostenfunktionen eine Abstiegsrichtung ermittelt, den angesetzten zweiten zeitlichen Verlauf unter Verwertung der Abstiegsrichtung variiert und die Ermittlung der Werte der Kostenfunktionen und der Gradienten der Kostenfunktionen sowie das Variieren wiederholt, bis der angesetzte zweite zeitliche Verlauf pareto-optimal ist, und den angesetzten zweiten zeitlichen Verlauf dann als möglichen zweiten zeitlichen Verlauf übernimmt.

Im einfachsten Fall, nämlich bei nur zwei Kostenfunktionen kann die Abstiegsrichtung beispielsweise dadurch ermittelt werden, dass die Winkelhalbierende der beiden Gradienten der Kostenfunktionen als Abstiegsrichtung verwendet wird. Pareto-optimal kann der angesetzte zweite zeitliche Verlauf dann sein, wenn die beiden Gradienten in entgegengesetzte Richtungen zeigen.

Entsprechende Vorgehensweisen zur Prüfung, wie im Falle von mehr als zwei Kostenfunktionen eine pareto-Optimierung möglich ist, und wie diese Optimierung vorgenommen werden kann, finden sich in dem Fachaufsatz "Stochastic Method for the Solution of Unconstrained Vector Optimization Problems" von S. Schäffler, R. Schulz und K. Weinzierl, veröffentlicht in Journal of Optimization Theory and Applications 114 (1), Seiten 209 bis 222, Januar 2002.

Insbesondere kann man im allgemeinen Fall für die Abstiegsrichtung folgenden Ansatz treffen. Die gesuchte Abstiegsrichtung ergibt sich als gewichtete Summe der Gradienten der Kostenfunktionen. Die Gewichtungsfaktoren sind dadurch bestimmt, dass sie nicht-negativ sind, also 0 sind oder größer als 0 sind, und ihre Summe den Wert 1 ergibt. Die konkreten Werte der Gewichtungsfaktoren sind diejenigen Werte, bei denen das Quadrat der L2-Norm der Summe der mit den Gewichtungsfaktoren gewichteten Gradienten minimal ist. Wenn mit G die Abstiegsrichtung, mit Gi die Gradienten der Kostenfunktionen und mit wi die Wichtungsfaktoren bezeichnet werden, muss also gelten:

$$G = \min_{wi} \left\| \sum_i (wi \cdot Gi) \right\|_2^2$$

mit den Bedingungen
$wi \geq 0$ und $\sum wi = 1$.

Es ist ohne weiteres möglich, hierfür mit allgemein bekannten numerischen Verfahren eine Lösung zu ermitteln. Im Ergebnis kann dadurch ein Pfad ermittelt werden, auf dem man zu einem zumindest lokalen pareto-Optimum gelangen kann. In dem Fachaufsatz werden auch Wege aufgezeigt, wie man zu einem globalen pareto-Optimum gelangen kann.

Beim Betrieb der weiteren Teilsysteme kann es sowohl während des ersten als auch während des zweiten Zeithorizonts immer wieder zu Störungen kommen. Dadurch kann es erforderlich sein, dass eine von den geplanten zweiten Betriebsweisen abweichende Betriebsweise der weiteren Teilsysteme erforderlich ist. Die Steuereinrichtung prüft daher während des zweiten Zeithorizonts, ob eine von den geplanten zweiten Betriebsweisen abweichende Betriebsweise der weiteren Teilsysteme erforderlich ist. In dem Fall, dass keine abweichende Betriebsweise erforderlich ist, betreibt die Steuereinrichtung die weiteren Teilsysteme entsprechend den geplanten zweiten Betriebsweisen und betreibt den elektrischen Energiespeicher derart, dass sich der Bezug an elektrischer Energie aus dem Versorgungsnetz während des zweiten Zeithorizonts gemäß des festgelegten zweiten zeitlichen Verlaufs des Bezugs an elektrischer Energie ergibt. In dem Fall, dass eine abweichende Betriebsweise erforderlich ist, sind verschiedene Vorgehensweisen möglich.

In seltenen Fällen hat ein derartiger geänderter Betrieb keine Auswirkungen auf den Bedarf an elektrischer Energie. Dann sind auch keine Anpassung des Bezugs an elektrischer Energie aus dem Versorgungsnetz erforderlich. Gleiches gilt für eine Anpassung des Betriebs des elektrischen Energiespeichers. In der Regel haben derartige Abweichungen jedoch auch Folgen bezüglich des Bedarfs an elektrischer Energie. Für die Kompensation derartiger Änderungen des Bedarfs an elektrischer Energie stehen einerseits eine Anpassung des Betriebs des elektrischen Energiespeichers und andererseits eine Anpassung des Bezugs an elektrischer Energie aus dem Versorgungsnetz zur Verfügung.

Im einfachsten Fall passt die Steuereinrichtung (selbstverständlich im Rahmen der Möglichkeiten) stets die Betriebsweise des Energiespeichers an. Besser ist es jedoch, wenn die Steuereinrichtung in dem Fall, dass eine abweichende Betriebsweise erforderlich ist, die weiteren Teilsysteme gemäß den abweichenden Betriebsweisen betreibt und ermittelt, in welchem Umfang sich dadurch ein der Festlegung des zweiten zeitlichen Verlaufs des Bezugs an elektrischer Energie zugrunde gelegter Bedarf an elektrischer Energie der weiteren Teilsysteme ändert. Hierauf aufbauend prüft die Steuereinrichtung vorzugsweise, ob mittels einer Anpassung des Betriebs des elektrischen Energiespeichers der festgelegte zweite zeitliche Verlauf des Bezugs an elektrischer Energie beibehalten werden kann. In dem Fall, dass der festgelegte zweite zeitliche Verlauf des Bezugs an elektrischer Energie nicht beibehalten werden kann, ändert die Steuereinrichtung den Bezug an elektrischer Energie mit oder ohne Anpassung des Betriebs des elektrischen Energiespeichers, um die abweichende Betriebsweise der weiteren Teilsysteme zu ermöglichen. In dem Fall hingegen, dass der festgelegte zweite zeitliche Verlauf des Bezugs an elektrischer Energie beibehalten werden kann, entscheidet die Steuereinrichtung vorzugsweise, ob und gegebenenfalls in welchem Umfang sie den Bezug an elektrischer Energie ändert, und betreibt den elektrischen Energiespeicher entsprechend.

Die Steuereinrichtung entscheidet also in den Fällen, in denen dies möglich ist, ob sie die Reserve des elektrischen Energiespeichers sofort verwertet oder ob sie die Reserve für später aufhebt. Ein Aufheben für später kann beispielsweise dann sinnvoll sein, wenn aktuell zwar eine Störung auftritt, aufgrund derer mehr elektrische Energie benötigt wird, die elektrische Energie aber zum Zeitpunkt der Störung sicher oder zumindest voraussichtlich kostengünstig erhältlich ist, während sie später sicher oder zumindest voraussichtlich erheblich teurer ist. Auch andere Fallkonstellationen sind denkbar. Beispielsweise kann in dem Fall, dass aufgrund der geänderten Betriebsweisen der weiteren Teilsysteme ein geringerer Bezug an elektrischer Energie anfällt, die inverse Vorgehensweise sinnvoll sein.

Vorzugsweise trifft die Steuereinrichtung ihre Entscheidung anhand der Art und des Ausmaßes der Änderung des Bedarfs an elektrischer Energie der weiteren Teilsysteme, des aktuellen Ladezustands des elektrischen Energiespeichers, des Fortschritts im zweiten Zeithorizont und/ oder geschätzter Preise für den Bezug an elektrischer Energie während des verbleibenden Teils des zweiten Zeithorizonts. Dies führt in der Praxis ohne Beeinträchtigung der technischen Sachverhalte zu einer Kostenoptimierung.

In der Regel wird das erfindungsgemäße Betriebsverfahren iterativ immer wieder erneut ausgeführt. Der zweite Zeithorizont einer jeweiligen Iteration ist hierbei zumindest teilweise Bestandteil des ersten Zeithorizonts der jeweils nachfolgenden Iteration. Im einfachsten Fall werden von Iteration zu Iteration stets dieselben Kostenfunktionen verwendet. Vorzugsweise wird jedoch mindestens eine der Kostenfunktionen von Iteration zu Iteration individuell bestimmt.

Die Bestimmung der entsprechenden Kostenfunktion kann insbesondere in Abhängigkeit vom erwarteten Preis für den Bezug an elektrischer Energie und/oder in Abhängigkeit vom geplanten Betrieb der Anlage während des zweiten Zeithorizonts der jeweiligen Iteration erfolgen.

Die Aufgabe wird weiterhin durch ein Steuerprogramm mit den Merkmalen des Anspruchs 11 gelöst. Erfindungsgemäß bewirkt die Abarbeitung des Maschinencodes durch die Steuereinrichtung, dass die Steuereinrichtung das Gesamtsystem gemäß einem erfindungsgemäßen Betriebsverfahren steuert.

Die Aufgabe wird weiterhin durch eine Steuereinrichtung mit den Merkmalen des Anspruchs 12 gelöst. Erfindungsgemäß ist die Steuereinrichtung mit einem erfindungsgemäßen Steuerprogramm programmiert, so dass die Steuereinrichtung bei Abarbeitung des Maschinencodes des Steuerprogramms das Gesamtsystem gemäß einem erfindungsgemäßen Betriebsverfahren steuert.

Die Aufgabe wird weiterhin durch ein Gesamtsystem mit den Merkmalen des Anspruchs 13 gelöst. Erfindungsgemäß ist vorgesehen, dass die Steuereinrichtung als erfindungsgemäße Steuereinrichtung ausgebildet ist, die bei Abarbeitung des Maschinencodes des Steuerprogramms das Gesamtsystem gemäß einem erfindungsgemäßen Betriebsverfahren steuert.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:

FIG 1      ein Gesamtsystem,
FIG 2      ein Ablaufdiagramm,
FIG 3      einen Zeitstrahl,
FIG 4      ein Ablaufdiagramm,
FIG 5      ein weiteres Ablaufdiagramm,
FIG 6      ein weiteres Ablaufdiagramm,
FIG 7      ein weiteres Ablaufdiagramm,
FIG 8      zwei Kostenfunktionen,

FIG 9        zwei Kostenfunktionen,

FIG 10      ein Ablaufdiagramm und

FIG 11      eine Kommunikationsstruktur.

Beschreibung der Ausführungsformen

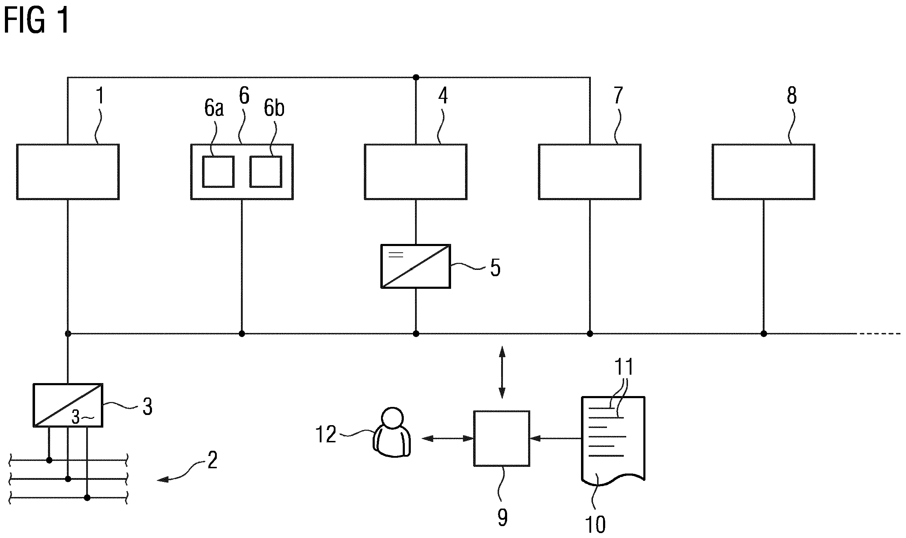

Gemäß FIG 1 umfasst ein Gesamtsystem eine Anlage 1 der Metallindustrie. Die Anlage 1 kann mehrere Komponenten aufweisen. Beispiele derartiger Anlagen 1 sind eine eisenerzeugende Komponente (beispielsweise eine DRI-Anlage), ein Lichtbogenofen, ein Konverter und eine Pfannenanlage. Eine andere mögliche Anlage 1 ist eine Warmbandstraße.

Die Anlage 1 verbraucht in ihrem Betrieb elektrische Energie. Die Anlage 1 kann die elektrische Energie aus einem elektrischen Versorgungsnetz 2 beziehen, mit dem die Anlage 1 direkt (nicht dargestellt) oder indirekt (beispielsweise über einen Umrichter 3) verbunden ist. Das Versorgungsnetz 2 ist üblicherweise ein Drehstromnetz und damit ein mehrphasiges Versorgungsnetz. Das Drehstromnetz wird oftmals mit einer Mittelspannung im Bereich von 20 kV bis 30 kV oder mit einer Hochspannung von 110 kV betrieben.

Das Gesamtsystem umfasst oftmals als weiteres Teilsystem eine Elektrolyseanlage 4. In Verbindung mit einer derartigen Ausgestaltung wird die Erfindung nachstehend erläutert. Die Elektrolyseanlage 4 ist jedoch nicht zwingend erforderlich.

Auch die Elektrolyseanlage 4 verbraucht in ihrem Betrieb elektrische Energie. Die Elektrolyseanlage 4 ist daher ebenfalls mit dem Versorgungsnetz 2 verbunden. Die Elektrolyseanlage 4 benötigt für ihren Betrieb eine Gleichspannung. Der Elektrolyseanlage 4 ist daher üblicherweise ein Gleichrichter 5 vorgeordnet, so dass nur eine indirekte Verbindung mit dem Versorgungsnetz 2 besteht.

In manchen Fällen benötigt die Anlage 1 für ihren Betrieb Wasserstoff. In diesem Fall sind die Anlage 1 und die Elektrolyseanlage 4 entsprechend der Darstellung in FIG 1 zum Transfer von Wasserstoff direkt oder indirekt miteinander verbunden. Etwaige Pumpen, Ventile und dergleichen sind in FIG 1 nicht mit dargestellt.

Das Gesamtsystem umfasst als Teilsystem weiterhin einen elektrischen Energiespeicher 6. Der Energiespeicher 6 ist zumindest zum Aufnehmen von elektrischer Energie aus dem Versorgungsnetz 2, eventuell auch zum Abgeben von elektrischer Energie in das Versorgungsnetz 2, direkt oder indirekt mit dem Versorgungsnetz 2 verbunden. Der Energiespeicher 6 ist weiterhin zum Abgeben elektrischer Energie mit der Anlage 1 und der Elektrolyseanlage 4 verbunden. Nimmt der Energiespeicher 6 elektrische Energie auf, wird sie stets aus dem Versorgungsnetz 2 bezogen. Gibt der Energiespeicher 6 elektrische Energie ab, wird sie primär zur Deckung des Bedarfs der Anlage 1 und der Elektrolyseanlage 4 und nur sekundär zur Einspeisung in das Versorgungsnetz 2 verwendet. Im Ergebnis kann somit-je nachdem, ob die vom Energiespeicher 6 abgegebene elektrische Energie größer oder kleiner als die von der Anlage 1 und Elektrolyseanlage 4 verbrauchte elektrische Energie ist - temporär elektrische Energie in das Versorgungsnetz 2 eingespeist oder aus dem Versorgungsnetz 2 bezogen werden.

Die genaue Art und Weise der elektrischen Verbindung der Anlage 1, der Elektrolyseanlage 4 und des elektrischen Energiespeichers 6 untereinander und mit dem Versorgungsnetz 2 ist von untergeordneter Bedeutung. Insbesondere können den verschiedenen Teilsystemen 1, 4 und 6 nach Bedarf Gleichrichter 5, Wechselrichter und sonstige Umrichter 3 zugeordnet sein. Es sollte jedoch gewährleistet sein, dass ein Transfer elektrischer Energie vom Energiespeicher 6 zu der Anlage 1 und der Elektrolyseanlage 4 ohne Umweg über das Versorgungsnetz 2 möglich ist.

Die vorstehend erläuterten Teilsysteme 1, 4, 6 stellen eine kleine Konfiguration des Gesamtsystems dar, wobei die Anlage 1 der Metallindustrie und der elektrische Energiespeicher 6 die Minimalkonfiguration bilden. Das Gesamtsystem kann jedoch gemäß FIG 1 auch noch andere Teilsysteme 7, 8, umfassen. Von den Teilsystemen 7, 8 kann nach Bedarf nur eines oder können beide vorhanden sein.

Beispielsweise kann das Gesamtsystem einen Wasserstoffspeicher 7 umfassen. Der Wasserstoffspeicher 7 kann als Speicher im engeren Sinne ausgebildet sein, also als dedizierter Wasserstoffspeicher. Auch das Leitungsnetz, über das Wasserstoff transportiert wird, weist jedoch eine gewisse Speicherkapazität auf und kann als Wasserstoffspeicher 7 dienen. Der Wasserstoffspeicher 7 ist, sofern er vorhanden ist, zum Aufnehmen von Wasserstoff direkt oder indirekt mit der Elektrolyseanlage 4 verbunden und zum Abgeben von Wasserstoff direkt oder indirekt mit der Anlage 1 verbunden. Aufgrund des Wasserstoffspeichers 7 sind der Betrieb der Anlage 1 und der Elektrolyseanlage 4 flexibler gestaltbar.

Sofern der Wasserstoffspeicher 7 vorhanden ist, ist es möglich, dass der von der Elektrolyseanlage 4 erzeugte Wasserstoff stets dem Wasserstoffspeicher 7 zugeführt wird und der von der Anlage 1 gegebenenfalls benötigte Wasserstoff stets von dem Wasserstoffspeicher 7 geliefert wird, so dass der Wasserstoffspeicher 7 sozusagen als Umschlagstation für den Wasserstoff dient. Es ist aber weiterhin auch eine direkte Verbindung der Anlage 1 und der Elektrolyseanlage 4 möglich.

Alternativ oder zusätzlich kann das Gesamtsystem eine Stromerzeugungseinrichtung 8 umfassen, beispielsweise eine Windenergieanlage oder eine Photovoltaikanlage. In diesem Fall ist die Stromerzeugungseinrichtung 8 zur Übertragung elektrischer Energie direkt oder indirekt mit den übrigen elektrische Energie aufnehmenden oder abgebenden Teilsystemen 1, 4, 6, 7 und auch dem elektrischen Versorgungsnetz 2 verbunden. Ein für die Stromerzeugungseinrichtung 8 meist erforderlicher Umrichter kann als Bestandteil der Stromerzeugungseinrichtung 8 angesehen werden. Er ist in FIG 1 nicht mit dargestellt. Vorzugsweise ist die Zuführung elektrischer Energie von der Stromerzeugungseinrichtung 8 zu den Teilsystemen 1, 4, 6, 7 ohne Umweg über das Versorgungsnetz 2 möglich.

Nachfolgend wird zwischen dem elektrischen Energiespeicher 6 einerseits und allen anderen Teilsystemen 1, 4 und gegebenenfalls auch 7, 8 unterschieden. Die "weiteren Teilsysteme" umfassen nicht den elektrischen Energiespeicher 6, sondern nur alle anderen Teilsysteme 1, 4 und gegebenenfalls auch 7, 8. Wenn hingegen der Begriff "Teilsysteme" ohne den Zusatz "weitere" verwendet wird, sind alle Teilsysteme 1, 4, 6 und gegebenenfalls auch 7, 8 gemeint, also einschließlich des elektrischen Energiespeichers 6.

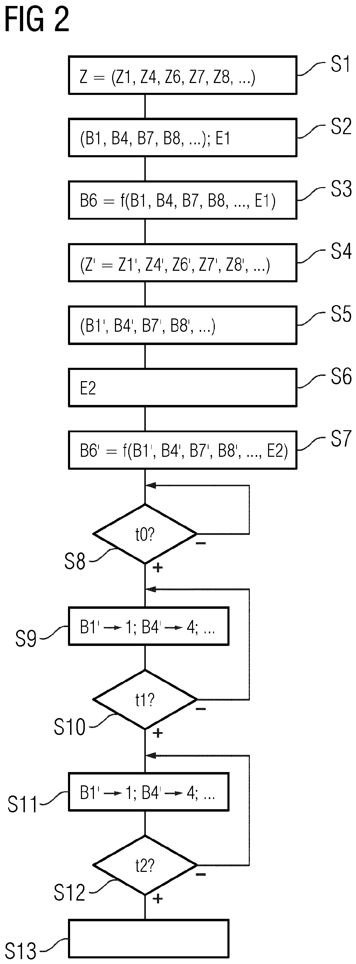

Das Gesamtsystem umfasst weiterhin eine Steuereinrichtung 9. Die Steuereinrichtung 9 ist mit einem Steuerprogramm 10 programmiert. Das Steuerprogramm 10 umfasst Maschinencode 11, der von der Steuereinrichtung 9 abarbeitbar ist. Aufgrund der Programmierung mit dem Steuerprogramm 10 arbeitet die Steuereinrichtung 9 den Maschinencode 11 ab. Die Abarbeitung des Maschinencodes 11 durch die Steuereinrichtung 9 bewirkt, dass die Steuereinrichtung 9 das Gesamtsystem gemäß einem Betriebsverfahren steuert, das nachstehend in Verbindung mit FIG 2 näher erläutert wird. Noch bevor das erfindungsgemäße Betriebsverfahren erläutert wird, wird jedoch darauf hingewiesen, dass die Steuereinrichtung 9 nachstehend zwar als einheitliche Steuereinrichtung 9 erläutert wird, welche die Teilsysteme 1, 4 und 6 und gegebenenfalls auch 7, 8 des Gesamtsystems gemeinsam steuert. Die Steuereinrichtung 9 kann jedoch ebenso für die Steuerung der Teilsysteme 1, 4 und 6 und gegebenenfalls auch 7, 8 jeweils eine eigene Teil-Steuereinrichtung aufweisen. In diesem Fall müssen zwischen den Teil-Steuereinrichtungen ein entsprechender Informationsaustausch und eine entsprechende Abstimmung bzw. Koordination erfolgen. Weiterhin wird darauf hingewiesen, dass nachstehend angenommen wird, dass die Elektrolyseanlage 4 und auch der Wasserstoffspeicher 7 und die Stromerzeugungseinrichtung 8 vorhanden sind. Die Vorgehensweise ist jedoch prinzipiell gleichartig, wenn das Teilsystem 4, das Teilsystem 7 und/oder das Teilsystem 8 nicht vorhanden sind oder gegebenenfalls auch zusätzliche, bisher nicht erwähnte Teilsysteme vorhanden sind.

Gemäß FIG 2 wird der Steuereinrichtung 9 in einem Schritt S1 ein Anfangszustand Z des Gesamtsystems bekannt. Der Anfangszustand Z umfasst für die Teilsysteme 1, 4, 6, 7 und 8 jeweils einen entsprechenden Teilzustand Z1, Z4, Z6, Z7, Z8. Die Ziffer des jeweiligen Teilzustands Z1, Z4, Z6, Z7, Z8 stimmt mit dem Bezugszeichen des jeweiligen Teilsystems 1, 4, 6, 7, 8 überein.

Beispielsweise kann der Teilzustand Z1 - das Vorhandensein entsprechender Komponenten der Anlage 1 vorausgesetzt - folgende Größen umfassen:

- den Produktionsfortschritt einer eisenerzeugenden Anlage,
- den Produktionsfortschritt eines Lichtbogenofens,
- einen Prozesszustand einer Stranggießmaschine,
- eine Temperatur eines einem Walzwerk vorgeordneten Ofens,
- Verschleißzustände von Arbeitswalzen von Walzgerüsten des Walzwerks,
- ob in den Walzgerüsten des Walzwerks gerade Walzstiche ausgeführt werden.

Der Teilzustand Z1 kann weiterhin umfassen, welche Materialien sich in welchem Zustand momentan in der Anlage 1 befinden. Beispielsweise kann der Teilzustand Z1 - das Vorhandensein entsprechender Materialien in entsprechenden Komponenten der Anlage 1 vorausgesetzt - folgende Größen umfassen:

- Menge und Zustand einer Charge in einem Lichtbogenofen oder in einer Pfanne,
- Zeitdauern, für welche sich Walzgüter bereits in einem Ofen befinden,
- Temperaturen der Walzgüter.

Der Teilzustand Z4 kann beispielsweise eine Temperatur und eine chemische Zusammensetzung der Elektrolyseflüssigkeit der Elektrolyseanlage 4 und einen Verschleißzustand der Elektrolyseanlage 4 umfassen.

Der Teilzustand Z6 umfasst zumindest den Ladezustand des elektrischen Energiespeichers 6, also das Ausmaß, zu dem der elektrische Energiespeicher 6 geladen ist. Der Teilzustand Z6 kann auch weitere Größen umfassen, beispielsweise eine Temperatur des elektrischen Energiespeichers 6 oder einen maximal möglichen oder zulässigen Lade- und Entladestrom. Weiterhin kann der Teilzustand Z6 einen Verschleißzustand des elektrischen Energiespeichers 6 umfassen.

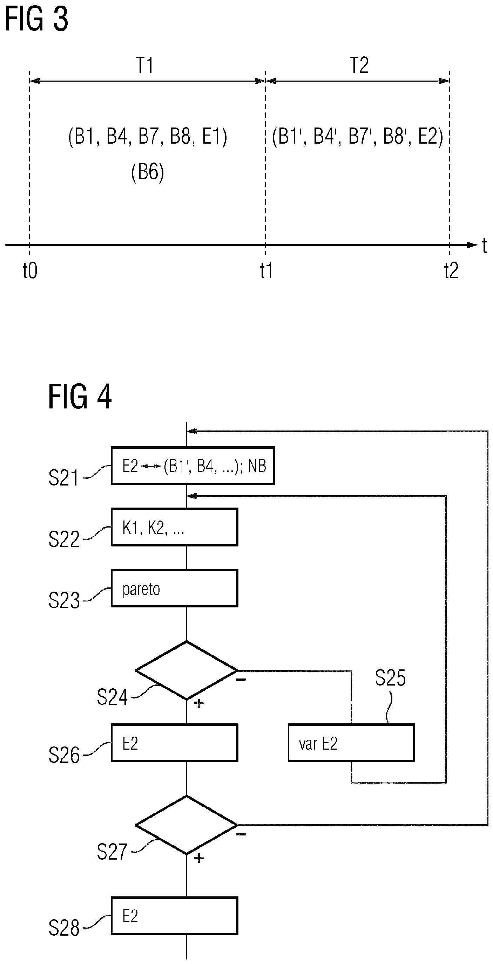

Der Anfangszustand Z ist gemäß FIG 3 auf einen Zeitpunkt t0 bezogen, zu dem ein erster Zeithorizont T1 beginnt. Da der Schritt S1 vor dem Zeitpunkt t0 ausgeführt wird, ist der Anfangszustand Z ein erwarteter Zustand. Der erwartete Zustand kann von der Steuereinrichtung 9 beispielsweise ausgehend von einem zum aktuellen Zeitpunkt gegebenen Zustand anhand einer bis zum Zeitpunkt t0 festgelegten Betriebsweise der Teilsysteme 1, 4 usw. prognostiziert werden. Der erste Zeithorizont T1 erstreckt sich gemäß FIG 3 über einen nennenswerten Zeitraum, beispielsweise über 12 Stunden. Natürlich ist auch ein anderer Zeitraum möglich. Mehrere Stunden - beispielsweise 2 Stunden, 3 Stunden und stundenweise weiter bis beispielsweise 24 Stunden werden in der Regel jedoch nicht unterschritten, mehrere Tage (also 2 Tage, 3 Tage usw. bis maximal 7 Tage) nicht überschritten.

In einem Schritt S2 werden der Steuereinrichtung 9 geplante erste Betriebsweisen B1, B4, B7, B8 für die weiteren Teilsysteme 1, 4 usw. (also nicht für den elektrischen Energiespeicher 6) bekannt. Weiterhin wird der Steuereinrichtung 9 im Schritt S2 ein geplanter erster zeitlicher Verlauf E1 des Bezugs an elektrischer Energie aus dem Versorgungsnetz 2 bekannt. Die Betriebsweisen B1, B4, B7, B8 und auch der erste zeitliche Verlauf E1 sind gemäß FIG 3 auf den ersten Zeithorizont T1 bezogen.

In einem Schritt S3 legt die Steuereinrichtung 9 für den ersten Zeithorizont T1 eine Betriebsweise B6 für den elektrischen Energiespeicher 6 fest. Die Festlegung erfolgt anhand der geplanten ersten Betriebsweisen B1, B4 usw. für die weiteren Teilsysteme 1, 4 usw. und des geplanten ersten zeitlichen Verlaufs E1 des Bezugs an elektrischer Energie aus dem Versorgungsnetz 2. Insbesondere steht aufgrund der bekannten Betriebsweisen B1, B4, B7, B8 fest, in welchem Ausmaß die entsprechenden weiteren Teilsysteme 1, 4, 7, 8 zu welchem Zeitpunkt t elektrische Energie benötigen. In Verbindung mit dem geplanten ersten zeitlicher Verlauf E1 des Bezugs an elektrischer Energie aus dem Versorgungsnetz 2 kann damit bestimmt werden, zu welchem Zeitpunkt t welche Menge an elektrischer Energie von dem elektrischen Energiespeicher 6 aufgenommen bzw. abgegeben werden muss. Mit dem Schritt S3 steht damit für den ersten Zeithorizont T1 die Betriebsweise des Gesamtsystems fest.

In einem Schritt S4 ermittelt die Steuereinrichtung 9 einen erwarteten Endzustand Z6' des elektrischen Energiespeichers 6. Der erwartete Endzustand Z6' ist gemäß FIG 3 auf das Ende des ersten Zeithorizonts T1 bezogen. Die Steuereinrichtung 9 ermittelt den erwarteten Endzustand Z6' basierend auf dem Anfangszustand Z6 des elektrischen Energiespeichers 6 und der zuvor ermittelten Betriebsweise B6 für den elektrischen Energiespeicher 6, im Ergebnis also basierend auf dem geplanten ersten zeitlichen Verlauf E1 des Bezugs an elektrischer Energie und den geplanten ersten Betriebsweisen B1, B4 usw. der weiteren Teilsysteme 1, 4 usw. In der Regel ermittelt die Steuereinrichtung 9 im Schritt S4 auch die erwarteten Endzustände Z1', Z4' usw. der weiteren Teilsysteme 1, 4 usw. Die Ermittlung der erwarteten Endzustände Z1', Z4' usw. der weiteren Teilsysteme 1, 4 usw. ist im Rahmen der vorliegenden Erfindung jedoch von untergeordneter Bedeutung.

In einem Schritt S5 werden der Steuereinrichtung 9 geplante zweite Betriebsweisen B1', B4' usw. der weiteren Teilsysteme 1, 4 usw. bekannt. Die geplanten zweiten Betriebsweisen B1', B4' können der Steuereinrichtung 9 beispielsweise von einer Bedienperson 12 (siehe FIG 1) vorgegeben werden. Die geplanten zweiten Betriebsweisen B1', B4' usw. sind - siehe FIG 3 - auf einen zweiten Zeithorizont T2 bezogen, der sich an den ersten Zeithorizont T1 unmittelbar anschließt. Der zweite Zeithorizont T2 erstreckt sich gemäß FIG 3 über einen nennenswerten Zeitraum, beispielsweise über 24 Stunden. Natürlich ist auch ein anderer Zeitraum möglich. Mehrere Stunden werden in der Regel jedoch nicht unterschritten, mehrere Tage nicht überschritten. Die obigen Ausführungen zum ersten Zeithorizont T1 sind in analoger Weise anwendbar.

In einem Schritt S6 legt die Steuereinrichtung 9 für den zweiten Zeithorizont T2 einen zweiten zeitlichen Verlauf E2 des Bezugs an elektrischer Energie aus dem Versorgungsnetz 2 fest. Der Schritt S6 wird später noch detailliert erläutert werden.

In einem Schritt S7 legt die Steuereinrichtung 9 für den zweiten Zeithorizont T2 eine Betriebsweise B6' für den elektrischen Energiespeicher 6 fest. Die Festlegung erfolgt anhand der geplanten zweiten Betriebsweisen B1', B4' usw. und des geplanten zweiten zeitlichen Verlaufs E1 des Bezugs an elektrischer Energie aus dem Versorgungsnetz 2. Die obigen Ausführungen zum Schritt S3 sind in analoger Weise anwendbar. Mit der Ausführung des Schrittes S7 steht somit für den zweiten Zeithorizont T2 die entsprechende Betriebsweise des Gesamtsystems fest.

Die Schritte S1 bis S7 werden vor dem Zeitpunkt t0 ausgeführt, also vor dem Beginn des ersten Zeithorizonts T1. In einem Schritt S8 wartet die Steuereinrichtung 9 daher den Beginn des ersten Zeithorizonts T1 ab. Dann geht die Steuereinrichtung 9 zu einem Schritt S9 über.

Im Schritt S9 steuert die Steuereinrichtung 9 - soweit möglich - die Teilsysteme 1, 4, 6 usw. entsprechend der zuvor ermittelten geplanten ersten Betriebsweisen B1, B4, B6 usw. an. Soweit erforderlich, steuert die Steuereinrichtung 9 im Rahmen des Schrittes S9 auch den Umrichter 3 an. Im Ergebnis gleicht der elektrische Energiespeicher 6 somit die Differenz zwischen dem elektrischen Energiebedarf der weiteren Teilsysteme 1, 4 usw. einerseits und dem - festgelegten - ersten Verlauf E1 des Bezugs an elektrischer Energie aus. Der Ausgleich erfolgt für jeden Zeitpunkt t oder zumindest für kleinere Zeiträume von typischerweise maximal 10 % des ersten Zeithorizonts T1. Meist liegen die kleineren Zeiträume im Bereich weniger Minuten, beispielsweise bei jeweils 15 Minuten.

Zum Einstellen, ob und in welchem Umfang dem elektrischen Energiespeicher 6 elektrische Energie zugeführt wird bzw. ob und in welchem Umfang der elektrische Energiespeicher 6 elektrische Energie abgibt, kann dem elektrischen Energiespeicher 6 beispielsweise eine bidirektional betreibbare Umrichtereinheit zugeordnet sein. Diese Umrichtereinheit ist in FIG 1 nicht mit dargestellt. Sie wird vielmehr als Bestandteil des elektrischen Energiespeichers 6 angesehen.

Der Schritt S9 wird immer wieder ausgeführt, bis das Ende t1 des ersten Zeithorizonts T1 erreicht ist. Geprüft wird dies von der Steuereinrichtung 9 in einem Schritt S10.

Wenn die Steuereinrichtung 9 vom Schritt S10 nicht zum Schritt S9 zurückgeht, geht die Steuereinrichtung 9 zu einem Schritt S11 über. Im Schritt S11 steuert die Steuereinrichtung 9 - soweit möglich - die Teilsysteme 1, 4, 6 usw. entsprechend der zuvor ermittelten geplanten zweiten Betriebsweisen B1', B4', B6' usw. an. Im Ergebnis gleicht der elektrische Energiespeicher 6 somit wie zuvor die Differenz zwischen dem elektrischen Energiebedarf der weiteren Teilsysteme 1, 4 usw. einerseits und dem - festgelegten - zweiten Verlauf E2 des Bezugs an elektrischer Energie aus. Der Ausgleich erfolgt für jeden Zeitpunkt t oder zumindest für kleinere Zeiträume von typischerweise maximal 10 % des zweiten Zeithorizonts T2. Meist liegen die kleineren Zeiträume im Bereich weniger Minuten, beispielsweise bei jeweils 15 Minuten.

Der Schritt S11 wird von der Steuereinrichtung 9 immer wieder ausgeführt, bis das Ende t2 des zweiten Zeithorizonts T2 erreicht ist. Dies wird von der Steuereinrichtung 9 in einem Schritt S12 geprüft.

Wenn die Steuereinrichtung 9 vom Schritt S12 nicht zum Schritt S11 zurückgeht, geht die Steuereinrichtung 9 zu einem Schritt S13 über. Im Schritt S13 werden weitere Maßnahmen ergriffen. Beispielsweise kann die Steuereinrichtung 9 im Schritt S13 die beiden Zeithorizonte T1, T2 anpassen und sodann wieder zurück zum Schritt S1 gehen. In diesem Fall wird die gesamte Vorgehensweise von FIG 2 iterativ und immer wieder erneut ausgeführt, wenn auch jeweils mit neuen Zeithorizonten T1, T2. In aller Regel ist bei der erneuten Ausführung der zweite Zeithorizont T2 einer jeweiligen Iteration zumindest teilweise Bestandteil des ersten Zeithorizonts T1 der jeweils nachfolgenden Iteration.

FIG 2 zeigt eine vereinfachte Vorgehensweise. Die reale Vorgehensweise ist etwas komplexer. Insbesondere erfolgt in der Realität eine rollierende Vorgehensweise. Die Schritte S1 bis S13 werden also immer wieder ausgeführt, wobei die Zeitpunkte t0, t1 und t2 bzw. die Zeithorizont T1 und T2 immer wieder angepasst und nachgeführt werden. Beispielsweise können der erste Zeithorizont T1 12 Stunden und der zweite Zeithorizont T2 24 Stunden betragen. Dies entspricht der in der EU typischen Vorgehensweise, dass bis 12:00 Uhr eines Tages die Festlegung des Bezugs an elektrischer Energie für den Folgetag (0:00 Uhr bis 24 Uhr) erfolgen muss. Wenn daher (beispielsweise) am 15. eines Monats bis 12:00 Uhr für den 16. des Monats die Festlegung für den Bezug an elektrischer Energie erfolgt, erfolgt am 16. des Monats bis 12:00 Uhr die Festlegung für den 17. des Monats. Für die zweite Hälfte des 16. des Monats ist damit jedoch der Bezug an elektrischer Energie aufgrund der am 15. des Monats vorgenommenen Festlegung bereits bekannt.

Nachfolgend wird in Verbindung mit FIG 4 eine typische Vorgehensweise zur Festlegung des zweiten zeitlichen Verlaufs E2 des Bezugs an elektrischer Energie erläutert. FIG 4 stellt also eine Implementierung des Schrittes S6 von FIG 2 dar.

Gemäß FIG 4 setzt die Steuereinrichtung 9 in einem Schritt S21 einen zweiten zeitlichen Verlauf E2 (vorläufig) an. Beim Ansetzen geht die Steuereinrichtung 9 vom erwarteten Endzustand B6' des elektrischen Energiespeichers 6 und der geplanten zweiten Betriebsweisen B1', B4' usw. der weiteren Teilsysteme 1, 4 usw. für den zweiten Zeithorizont T2 aus.

Beim Ansetzen des entsprechenden zeitlichen Verlaufs E2 berücksichtigt die Steuereinrichtung 9 Nebenbedingungen, die von dem zeitlichen Verlauf E2 eingehalten werden müssen. Insbesondere sind bei der Ausführung des Schrittes S21 bereits die Betriebsweisen B1', B4' usw. der weiteren Teilsysteme 1, 4 usw. bekannt, so dass der zeitliche Verlauf des elektrischen Energiebedarfs der weiteren Teilsysteme 1, 4 usw. bekannt ist. Weiterhin sind die Betriebsgrenzen des elektrischen Energiespeichers 6 bekannt, also der maximal mögliche oder zulässige Ladestrom, der maximal mögliche oder zulässige Entladestrom, der minimal mögliche oder zulässige Ladezustand und der minimal mögliche oder zulässige Ladezustand. Eine weitere mögliche Nebenbedingung kann darin bestehen, dass der Ladezustand des elektrischen Energiespeichers 6 am Ende des zweiten Zeithorizonts T2 einen vorbestimmten Wert aufweisen soll oder zumindest in einem vorbestimmten Wertebereich liegen soll. Der Ansatz des Schrittes S21 ist daher zwar einerseits nicht eindeutig festgelegt, kann andererseits aber auch nicht völlig beliebig sein. Der jeweilige Ansatz ist vielmehr derart gewählt, dass der angesetzte zweite zeitliche Verlauf E2 des Bezugs an elektrischer Energie die Nebenbedingungen NB erfüllt.

In einem Schritt S22 ermittelt die Steuereinrichtung 9 für den im Schritt S21 angesetzten zweiten zeitlichen Verlauf E2 die Werte einer Mehrzahl von Kostenfunktionen K1, K2. Minimal ermittelt die Steuereinrichtung 9 also die Werte von zwei Kostenfunktionen K1, K2. Gegebenenfalls können aber auch die Werte von mehr als zwei Kostenfunktionen ermittelt werden. Unabhängig von der Anzahl an Kostenfunktionen K1, K2 sind die Kostenfunktionen K1, K2 vom zweiten zeitlichen Verlauf E2 des Bezugs an elektrischer Energie abhängig. Die Abhängigkeiten der Kostenfunktionen K1, K2 vom zweiten zeitlichen Verlauf E2 des Bezugs an elektrischer Energie sind jedoch von Kostenfunktion zu Kostenfunktion unterschiedlich.

In einem Schritt S23 nimmt die Steuereinrichtung 9 eine pareto-Optimierung des angesetzten zweiten zeitlichen Verlaufs E2 bezüglich der Kostenfunktionen K1, K2 vor.

In einem Schritt S24 prüft die Steuereinrichtung 9, ob der angesetzte zweite zeitliche Verlauf E2 des Bezugs an elektrischer Energie pareto-optimal ist. Wenn dies nicht der Fall ist, geht die Steuereinrichtung 9 zu einem Schritt S25 über, in dem sie den angesetzten zweiten zeitlichen Verlauf E2 im Sinne einer pareto-Optimierung variiert. Auch beim Variieren des angesetzten zweiten zeitlichen Verlaufs E2 berücksichtigt die Steuereinrichtung 9 die in Verbindung mit dem Schritt S21 genannten Nebenbedingungen NB. Vom Schritt S25 aus geht die Steuereinrichtung 9 zum Schritt S22 zurück.

Wenn der angesetzte zweite zeitliche Verlauf E2 des Bezugs an elektrischer Energie hingegen pareto-optimal ist, geht die Steuereinrichtung 9 zu einem Schritt S26 über, in dem sie den angesetzten zweiten zeitlichen Verlauf E2 als möglichen zweiten zeitlichen Verlauf E2 speichert.

Vom Schritt S26 aus geht die Steuereinrichtung 9 zu einem Schritt S27 über. Im Schritt S27 prüft die Steuereinrichtung 9, ob sie die Schritte S21 bis S26 bereits für alle anzusetzenden zweiten zeitlichen Verläufe E2 ausgeführt hat. Wenn dies nicht der Fall ist, geht die Steuereinrichtung 9 zum Schritt S21 zurück. Bei der erneuten Ausführung des Schrittes S21 setzt die Steuereinrichtung 9 jedoch einen neuen, anderen zweiten zeitlichen Verlauf E2 an. Demzufolge wird bei der erneuten Ausführung des Schrittes S26 der neu aufgefundene pareto-optimale mögliche zweite zeitliche Verlauf E2 zusätzlich zu den bereits aufgefundenen möglichen zweiten zeitlichen Verläufen E2 gespeichert.

Wenn die Steuereinrichtung 9 die Schritte S21 bis S26 bereits für alle anzusetzenden zweiten zeitlichen Verläufe E2 ausgeführt hat, geht die Steuereinrichtung 9 vom Schritt S27 zu einem Schritt S28 über. Im Schritt S28 erfolgt für den zweiten Zeithorizont T2 die Auswahl bzw. Festlegung eines der aufgefundenen möglichen zweiten zeitlichen Verläufe E2 als festgelegter zweiter zeitlicher Verlauf E2 des Bezugs an elektrischer Energie.

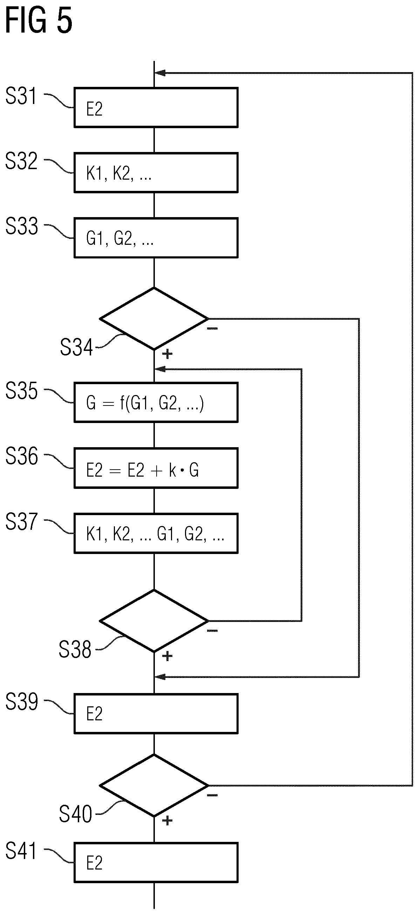

Nachstehend wird in Verbindung mit FIG 5 eine Ausgestaltung der Vorgehensweise von FIG 4 erläutert, mittels derer die Ermittlung der pareto-optimalen möglichen zweiten zeitlichen Verläufe E2 des Bezugs an elektrischer Energie auf besonders einfache Art und Weise durchgeführt werden kann.

FIG 5 umfasst Schritte S31 bis S41. Die Schritte S31, S32, S38, S39, S40 und S41 von FIG 5 korrespondieren 1:1 mit den Schritten S21, S22, S24, S26, S27 und S28 von FIG 4. Diese Schritte werden daher nur kurz erwähnt, nicht aber näher erläutert.

Gemäß FIG 5 setzt die Steuereinrichtung 9 im Schritt S31 einen zweiten zeitlichen Verlauf E2 (vorläufig) an. Im Schritt S32 ermittelt die Steuereinrichtung 9 für den im Schritt S31 angesetzten zweiten zeitlichen Verlauf E2 die Werte der Kostenfunktionen K1, K2.

Im Schritt S33 ermittelt die Steuereinrichtung 9 für den zweiten Zeithorizont T2 die G1, G2 der Kostenfunktionen K1, K2. Die Ermittlung der Gradienten G1, G2 ist ohne weiteres möglich.

Im Schritt S34 entscheidet die Steuereinrichtung 9, ob der im Schritt S31 angesetzte zweite zeitliche Verlauf E2 pareto-optimierbar ist oder nicht. Die Steuereinrichtung 9 trifft die Entscheidung anhand der Gesamtheit der Gradienten G1, G2.

Es ist möglich, dass der im Schritt S31 angesetzte zweite zeitliche Verlauf E2 bereits selbst schon pareto-optimal ist, also keine weitergehende Optimierung mehr vorgenommen werden kann und muss. In diesem Fall geht die Steuereinrichtung 9 direkt zum Schritt S39 über. Auf den Schritt S39 wird später noch eingegangen.

Wenn eine pareto-Optimierung möglich ist, ermittelt die Steuereinrichtung 9 im Schritt S35 unter Verwertung der Gradienten G1, G2 der Kostenfunktionen K1, K2 eine Abstiegsrichtung G. Im Falle von exakt zwei Kostenfunktionen K1, K2 kann die Steuereinrichtung 9 beispielsweise als Abstiegsrichtung G die Winkelhalbierende der Gradienten G1, G2 ermitteln.

Im Schritt S36 variiert die Steuereinrichtung 9 den angesetzten zweiten zeitlichen Verlauf E2 unter Verwertung der Abstiegsrichtung G. Insbesondere kann die Steuereinrichtung 9 den angesetzten zweiten zeitlichen Verlauf E2 in die durch die Abstiegsrichtung G gegebene Richtung variieren. Beispielsweise kann die Steuereinrichtung 9 die Abstiegsrichtung G mit einem Faktor k multiplizieren und zum bisherigen zweiten zeitlichen Verlauf E2 addieren.

Im Schritt S37 ermittelt die Steuereinrichtung 9 erneut die Werte der Kostenfunktionen K1, K2 und die Gradienten G1, G2 der Kostenfunktionen K1, K2. Im Schritt S38 prüft die Steuereinrichtung 9, ob der im Schritt S36 ermittelte (variierte) zweite zeitliche Verlauf E2 pareto-optimal ist oder nicht. Die Steuereinrichtung 9 trifft die Entscheidung anhand der Gesamtheit der im Schritt S37 ermittelten Gradienten G1, G2.

Wenn der im Schritt S36 ermittelte (variierte) zweite zeitliche Verlauf E2 noch nicht pareto-optimal ist, geht die Steuereinrichtung 9 zum Schritt S35 zurück. Anderenfalls ist der nunmehrige zweite zeitliche Verlauf E2 pareto-optimal und kann daher von der Steuereinrichtung 9 im Schritt S39 als möglicher zweiter zeitlicher Verlauf E2 übernommen werden.

Im Schritt S40 prüft die Steuereinrichtung 9, ob sie die Schritte S31 bis S39 bereits für alle anzusetzenden zweiten zeitlichen Verläufe E2 ausgeführt hat. Je nachdem, ob dies der Fall ist oder nicht, geht die Steuereinrichtung 9 zum Schritt S31 zurück oder zum Schritt S41 über. Im Schritt S41 erfolgt für den zweiten Zeithorizont T2 die Auswahl bzw. Festlegung eines der aufgefundenen möglichen zweiten zeitlichen Verläufe E2 als festgelegter zweiter zeitlicher Verlauf E2 des Bezugs an elektrischer Energie.

Die Vorgehensweise von FIG 5 wurde vorstehend in Verbindung mit einer sequenziellen Ermittlung der möglichen zweiten zeitlichen Verläufe E2 erläutert. Anstelle einer sequenziellen Ermittlung ist auch eine parallele Ermittlung möglich, sofern die Steuereinrichtung 9 entsprechend ausgebildet ist.

Die geplanten ersten Betriebsweisen B1, B4 usw. sind Betriebsweisen, mit denen die entsprechenden weiteren Teilsysteme 1, 4 usw. während des ersten Zeithorizonts T1 nach Möglichkeit betrieben werden. In der Praxis können bei der Festlegung der geplanten ersten Betriebsweisen B1, B4 usw. jedoch nicht alle Sachverhalte vollständig berücksichtigt werden. Es bleiben stets gewisse Sachverhalte unberücksichtigt. Beispielsweise kann im Falle eines Walzwerks als Anlage 1 der Metallindustrie ein Walzgut etwas wärmer oder etwas kälter als geplant sein, so dass Walzkräfte, Walzmomente und der zugehörige Bedarf an elektrischer Energie variieren.

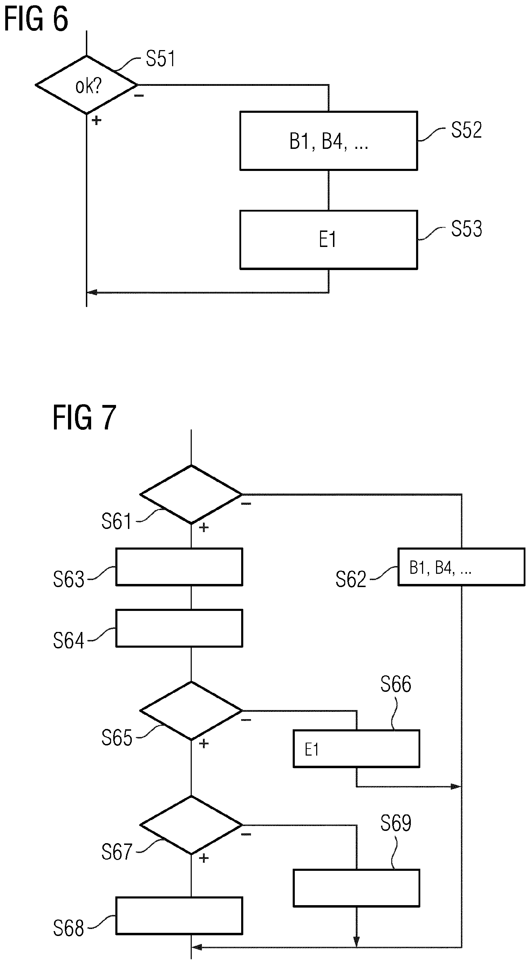

Die Steuereinrichtung 9 prüft daher auch während des ersten Zeithorizonts T1 gemäß FIG 6 in einem Schritt S51, ob beim tatsächlichen Betrieb der weiteren Teilsysteme 1, 4 usw. Betriebsgrenzen des elektrischen Energiespeichers 6 (beispielsweise maximale Ströme oder ein minimaler oder ein maximaler Ladungszustand) momentan und während des verbleibenden Teils des ersten Zeithorizonts T1 eingehalten werden. Anders ausgedrückt: Die Planung wurde so vorgenommen, dass die Betriebsgrenzen des elektrischen Energiespeichers 6 eingehalten werden. Aufgrund der unberücksichtigten Sachverhalte erfolgt nunmehr jedoch ein anderer Betrieb des elektrischen Energiespeichers 6 als angenommen. Daher ist es nunmehr möglich, dass trotz der Planung und beispielsweise auch trotz der Berücksichtigung gewisser Reserven bei der Planung die Betriebsgrenzen des elektrischen Energiespeichers 6 nicht mehr eingehalten werden.

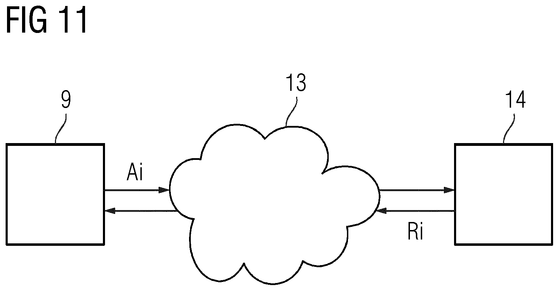

Ergibt die Prüfung des Schrittes S51, dass die Betriebsgrenzen eingehalten werden, ergreift die Steuereinrichtung 9, soweit es den geplanten ersten zeitlichen Verlauf E1 des Bezugs an elektrischer Energie betrifft, keine weitergehenden Maßnahmen. Insbesondere behält sie den geplanten ersten zeitlichen Verlauf E1 unverändert bei. Ergibt die Prüfung des Schrittes S51 hingegen, dass die Betriebsgrenzen nicht eingehalten werden, ändert die Steuereinrichtung 9 in einem Schritt S52 die geplanten ersten Betriebsweisen B1, B4 usw. - selbstverständlich nur für die Zukunft, vorliegend also den verbleibenden Teil des ersten Zeithorizonts T1 - ab. Beispielsweise kann eine Walzgeschwindigkeit angepasst werden oder kann eine Produktion an Wasserstoff angepasst werden. Alternativ oder zusätzlich ändert die Steuereinrichtung 9 in einem Schritt S53 den geplanten ersten Verlauf E1 des Bezugs an elektrischer Energie ab, auch hier selbstverständlich nur für die Zukunft, also den verbleibenden Teil des ersten Zeithorizonts T1. Beispielsweise kann die Steuereinrichtung 9 an einer Energiebörse 14 (siehe FIG 11) für mindestens einen Teilbereich des verbleibenden Teils des ersten Zeithorizonts T1 direkt eine gewisse Menge an elektrischer Energie nachkaufen oder zurückgeben. Sowohl beim Schritt S52 als auch beim Schritt S53 sind die ergriffenen Maßnahmen darauf gerichtet, dass die Betriebsgrenzen des elektrischen Energiespeichers 6 eingehalten werden.

FIG 6 stellt somit eine mögliche Ausgestaltung des Schrittes S9 von FIG 2 dar. Die Vorgehensweise von FIG 6 ist stets realisierbar. Bevorzugt ist jedoch eine Ausgestaltung, wie sie nachstehend in Verbindung mit FIG 7 erläutert wird.

Gemäß FIG 7 prüft die Steuereinrichtung 9 während des ersten Zeithorizonts T1 in einem Schritt S61, ob eine von den geplanten ersten Betriebsweisen B1, B4 usw. abweichende Betriebsweise der weiteren Teilsysteme 1, 4 usw. erforderlich ist. Der Schritt S61 korrespondiert im Kern mit dem Schritt S51 von FIG 6.

Ergibt die Prüfung, dass keine abweichende Betriebsweise erforderlich ist, erfolgt im Schritt S62 eine Ansteuerung der weiteren Teilsysteme 1, 4 usw. entsprechend den geplanten ersten Betriebsweisen B1, B4 usw. Auch die Ansteuerung des elektrischen Energiespeichers 6 wird entsprechend der vorherigen Ermittlung (B6) vorgenommen. Dadurch ergibt sich der Bezug an elektrischer Energie aus dem Versorgungsnetz 2 während des ersten Zeithorizonts T1 gemäß des festgelegten ersten zeitlichen Verlaufs E1 des Bezugs an elektrischer Energie.

Ergibt die Prüfung hingegen, dass eine abweichende Betriebsweise erforderlich ist, betreibt die Steuereinrichtung 9 die weiteren Teilsysteme 1, 4 usw. in einem Schritt S63 gemäß den abweichenden Betriebsweisen. Weiterhin ermittelt die Steuereinrichtung 9 in einem Schritt S64, in welchem Umfang sich dadurch - also den geänderten Betrieb der weiteren Teilsysteme 1, 4 usw. - der Bedarf an elektrischer Energie der weiteren Teilsysteme 1, 4 usw. ändert. Der ursprüngliche, noch nicht geänderte Bedarf ist derjenige Bedarf, welcher der Planung und Festlegung des ersten zeitlichen Verlaufs E1 des Bezugs an elektrischer Energie zugrunde gelegt wurde.

In Ausnahmefällen kann es möglich sein, dass sich trotz des geänderten Betriebs der weiteren Teilsysteme 1, 4 usw. der Bedarf an elektrischer Energie unverändert bleibt. In diesem Fall kann - selbstverständlich - der Betrieb des elektrischen Energiespeichers 6 ebenfalls unverändert beibehalten werden. In aller Regel ergeben sich jedoch entsprechende Änderungen. Die Steuereinrichtung 9 prüft daher einem Schritt S65, ob der festgelegte erste zeitliche Verlauf E1 des Bezugs an elektrischer Energie beibehalten werden kann, wenn der Betriebs des elektrischen Energiespeichers 6 entsprechend angepasst wird.

Wenn dies nicht der Fall ist, ändert die Steuereinrichtung 9 in einem Schritt S66 den Bezug an elektrischer Energie aus dem Versorgungsnetz 2. Dies kann nach Bedarf mit oder ohne Anpassung des Betriebs des elektrischen Energiespeichers 6 erfolgen. Die Anpassung des Bezugs an elektrischer Energie erfolgt mit dem Ziel, die abweichende Betriebsweise der weiteren Teilsysteme 1, 4 usw. zu ermöglichen.

Wenn der festgelegte erste zeitliche Verlauf E1 des Bezugs an elektrischer Energie beibehalten werden kann, entscheidet die Steuereinrichtung 9 in einem Schritt S67, ob und gegebenenfalls in welchem Umfang sie den Bezug an elektrischer Energie aus dem Versorgungsnetz 2 ändert. Ändert die Steuereinrichtung 9 den Bezug an elektrischer Energie, betreibt sie in einem Schritt S68 den elektrischen Energiespeicher 6 unverändert weiter, also so, wie dies bei der Ermittlung der entsprechenden Betriebsweise im Schritt S3 (vergleiche FIG 2) festgelegt wurde. Anderenfalls passt die Steuereinrichtung 9 in einem Schritt S69 die Betriebsweise B6 des elektrischen Energiespeichers 6 entsprechend an, so dass der zuvor festgelegte erste zeitliche Verlauf E1 des Bezugs an elektrischer Energie beibehalten werden kann.

Im Rahmen der Entscheidung des Schrittes S67 können verschiedene Sachverhalte berücksichtigt werden. Die wichtigsten Sachverhalte sind die Art und das Ausmaß der Änderung des Bedarfs an elektrischer Energie der weiteren Teilsysteme 1, 4 usw., der aktuelle Ladezustand des elektrischen Energiespeichers 6, des Fortschritts im ersten Zeithorizont T1 und geschätzte Preise für den Bezug an elektrischer Energie während des verbleibenden Teils des ersten Zeithorizonts T1 und gegebenenfalls auch des zweiten Zeithorizonts T2. Auch ist es möglich, das Problem der Bedienperson 12 zur Entscheidung vorzulegen und die entsprechende Entscheidung von der Bedienperson 12 entgegenzunehmen.

Zu den FIG 6 und 7 völlig analoge Vorgehensweisen sind auch für den zweiten Zeithorizont T2 möglich, also für eine Ausgestaltung des Schrittes S11 von FIG 2. Der einzige Unterschied besteht darin, dass, wenn die Vorgehensweise von FIG 7 den zweiten Zeithorizont T2 ausgeführt wird, im Rahmen des Schrittes S67 nur noch der verbleibende Teil des zweiten Zeithorizonts T2 berücksichtigt werden kann.

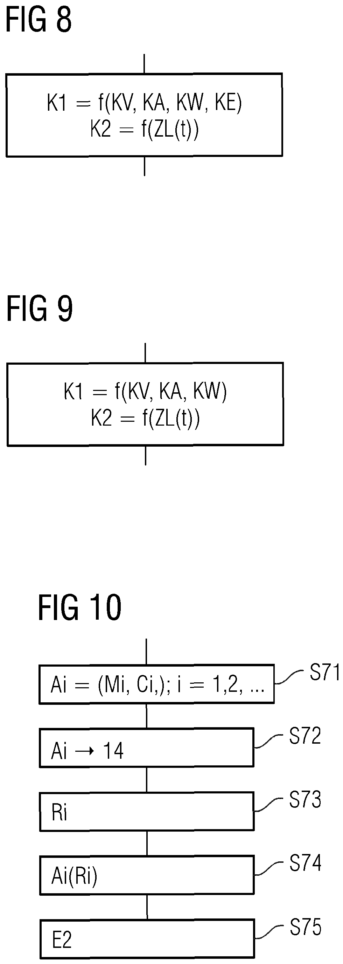

Die Kostenfunktionen K1, K2 können nach Bedarf bestimmt sein. In vielen Fällen umfassen die Kostenfunktionen K1, K2 eine erste Kostenfunktion K1, deren Wert entsprechend der Darstellung in den FIG 8 und 9 von Kosten des Betriebs des elektrischen Energiespeichers 6 während des zweiten Zeithorizonts T2 abhängig ist. In diese Kosten können beispielsweise die Betriebskosten KV aufgrund eines Verschleißes, die Betriebskosten KA aufgrund der Anschaffung oder die Kosten KW für eine gegebenenfalls erforderliche Wartung eingehen.

Im Regelfall ist es sinnvoll, wenn die erste Kostenfunktion K1 entsprechend der Darstellung in FIG 8 zusätzlich auch von Kosten KE für den Bezug an elektrischer Energie aus dem Versorgungsnetz 2 abhängig ist. Je nach Lage des Einzelfalls kann jedoch sinnvoll sein, wenn die erste Kostenfunktion K1 entsprechend der Darstellung in FIG 9 ausschließlich von den Kosten KA, KV, KW des Betriebs des elektrischen Energiespeichers 6 als solchen abhängt, also ohne auch die Kosten KE für den Bezug an elektrischer Energie aus dem Versorgungsnetz 2 mit zu berücksichtigen.

In vielen Fällen umfassen die Kostenfunktionen K1, K2 entsprechend den Darstellungen in den FIG 8 und 9 weiterhin eine zweite Kostenfunktion K2, deren Wert vom zeitlichen Verlauf eines Ladezustands ZL des elektrischen Energiespeichers 6 während des zweiten Zeithorizonts T2 abhängig ist. Insbesondere kann der zeitliche Verlauf des Ladezustands ZL zu einer Obergrenze und/oder zu einer Untergrenze für den Ladezustand ZL in Bezug gesetzt werden. Die Obergrenze und/oder die Untergrenze können nach Bedarf fest oder zeitabhängig sein. Somit kann im Ergebnis bewertet werden, welche - gegebenenfalls zeitabhängige - Reserve der elektrische Energiespeicher 6 nach oben oder nach unten (d.h. zur zusätzlichen Aufnahme von elektrischer Energie oder zum Abgeben von elektrischer Energie) zur Verfügung stellt. Die Abhängigkeit der zweiten Kostenfunktion K2 kann beispielsweise unter Berücksichtigung der geplanten zweiten Betriebsweisen B1', B4' usw. der weiteren Teilsysteme 1, 4 usw. und/oder unter Berücksichtigung der Kosten für die elektrische Energie erfolgen, die für bestimmte Abschnitte des zweiten Zeithorizonts T2 erwartet werden.

Wie vorstehend in Verbindung mit FIG 2 erläutert, wird das Verfahren in seiner Gesamtheit in der Regel iterativ und immer wieder ausgeführt. Es ist möglich, dass die Kostenfunktionen K1, K2 von Iteration zu Iteration unverändert bleiben. Vorzugsweise wird jedoch mindestens eine der Kostenfunktionen K1, K2 von Iteration zu Iteration individuell bestimmt.

Wie vorstehend in Verbindung mit den FIG 4 und 5 erläutert, ermittelt die Steuereinrichtung 9 in der Regel mehrere mögliche zweite zeitliche Verläufe E2, von denen später einer ausgewählt und damit als zu verwendender zweiter zeitlicher Verlauf E2 festgelegt wird. Diese Festlegung kann auf verschiedene Art und Weise ausgestaltet sein.

Im einfachsten Fall erfolgt durch die Steuereinrichtung 9 eine Ausgabe an die Bedienperson 12 (siehe FIG 1) und nimmt die Steuereinrichtung 9 von der Bedienperson 12 die Auswahl entgegen. In diesem Fall bietet die Steuereinrichtung 9 der Bedienperson 12 eine Reihe von Möglichkeiten, aus denen die Bedienperson 12 eine auswählt.

Alternativ ist es möglich, dass die Steuereinrichtung 9 selbsttätig einige oder alle der zuvor ermittelten möglichen zweiten zeitlichen Verläufe E2 auswählt oder von der Bedienperson 12 eine Auswahl von mehreren der möglichen zweiten zeitlichen Verläufe E2 entgegennimmt und sodann eigenständig entscheidet, welcher der ausgewählten zweiten zeitlichen Verläufe E2 als zu verwendender zweiter zeitlicher Verlauf E2 festgelegt wird. Eine mögliche Ausgestaltung hierfür wird nachstehend in Verbindung mit FIG 10 erläutert.

Im Rahmen der Vorgehensweise von FIG 10 wird vorausgesetzt, dass die Steuereinrichtung 9 entsprechend der Darstellung in FIG 11 über das Internet 13 mit einer Energiebörse 14 verbunden ist. In diesem Fall kann die Steuereinrichtung 9 entsprechend der Darstellung in FIG 10 in einem Schritt S71 für eine Anzahl von Abschnitten des zweiten Zeithorizonts T2 (beispielsweise bei einer Länge des zweiten Zeitabschnitts T2 von 24 Stunden für 24 Abschnitte von jeweils einer Stunde) jeweils eine Anzahl an Anforderungen Ai (mit i = 1, 2, 3 usw.) für den Bezug an elektrischer Energie aus dem Versorgungsnetz 2 ermitteln. Die Anforderungen Ai umfassen jeweils eine gewünschte Menge Mi an elektrischer Energie und jeweilige Bedingungen Ci, beispielsweise einen gewünschten Maximalpreis. Die Steuereinrichtung 9 berücksichtigt bei der Festlegung der Anforderungen Ai die möglichen zweiten zeitlichen Verläufe E2 für den Bezug an elektrischer Energie aus dem Versorgungsnetz 2. In der Regel sind die Anforderungen Ai gestaffelt, d.h. sie unterscheiden sich zumindest im jeweils zugeordneten gebotenen Preis. Die jeweils angeforderten Mengen Mi an elektrischer Energie sind in der Regel ebenfalls voneinander verschieden, können aber im Einzelfall auch gleich sein.

**EP 4 498 557 A1**

In einem Schritt S72 gibt die Steuereinrichtung 9 die von ihr ermittelten Anforderungen Ai an der Energiebörse 14 ab. In einem Schritt S73 nimmt die Steuereinrichtung 9 für die Anforderungen Ai Antworten Ri entgegen. Die Antworten Ri enthalten jeweils die Information, ob für die entsprechende Anforderung Ai der Bezug der angeforderten Menge Mi an elektrischer Energie unter Erfüllung der jeweils zugeordneten Bedingungen Ci von der Energiebörse 14 zugesagt wird oder nicht.

In einem Schritt S74 übernimmt die Steuereinrichtung 9 sodann diejenigen Anforderungen Ai, bei denen der Bezug der angeforderten Mengen Mi an elektrischer Energie unter Erfüllung der jeweils zugeordneten Bedingungen Ci von der Energiebörse 14 zugesagt wird. In einem Schritt S75 trifft die Steuereinrichtung 9 schließlich aufgrund der Anforderungen des Schrittes S74 die Entscheidung darüber, welcher der möglichen zweiten zeitlichen Verläufe E2 als zu verwendender zweiter zeitlicher Verlauf E2 festgelegt wird.

Im einfachsten Fall umfasst der elektrische Energiespeicher 6 nur einen einzelnen, einheitlichen Speicher. Der elektrische Energiespeicher 6 kann jedoch entsprechend der Darstellung in FIG 1 auch mehrere Teilspeicher 6a, 6b umfassen. Für die Teilspeicher 6a, 6b ist unabhängig voneinander einstellbar, ob und in welchem Umfang dem weiteren Teilspeicher 6a, 6b elektrische Energie zugeführt wird bzw. ob und in welchem Umfang der jeweilige Teilspeicher 6a, 6b elektrische Energie abgibt. Zu diesem Zweck ist für die Teilspeicher 6a, 6b in der Regel jeweils eine eigene bidirektional betreibbare Umrichtereinheit vorhanden. Diese Umrichtereinheiten sind nicht mit dargestellt.

Sofern der elektrische Energiespeicher 6 in mehrere Teilspeicher 6a, 6b unterteilt ist, unterscheiden sich die Teilspeicher 6a, 6b vorzugsweise in ihren möglichen Leistungsgrenzen voneinander, beispielsweise in ihrer Kapazität und ihren maximal möglichen oder zulässigen Lade- und Entladeströmen (bzw. entsprechenden Leistungen). Beispielsweise kann der Teilspeicher 6a eine deutlich kleinere Speicherkapazität, aber eine erheblich größere maximale Lade- und Entladeleistung aufweisen als der Teilspeicher 6b. Beispielhaft seien für den Teilspeicher 6a die Werte 10 MWh und 100 MW und für den Teilspeicher 6b die Werte 100 MWh und 25 MW genannt. Der Teilspeicher 6a kann beispielsweise als Natrium-Ionen-Batterie ausgebildet sein, der Teilspeicher 6b beispielsweise als Redox-Flow-Batterie oder als Natrium-Schwefel-Batterie.

Der gemeinsame Betrieb mehrerer Teilspeicher 6a, 6b ist Fachleuten als solcher bekannt. Er wird daher nicht detailliert erläutert.

Die vorliegende Erfindung weist viele Vorteile auf. Aufgrund der vorherigen Festlegung und späteren Realisierung des zweiten Verlaufs E2 des Bezugs an elektrischer Energie aus dem Versorgungsnetz 2 sind die Kosten für die elektrische Energie zuverlässig planbar. Insbesondere durch die Teilnahme an der Internetbörse 14 können die Kosten für die elektrische Energie sogar minimiert werden. Auch die Einbindung beispielsweise längerfristiger Bezugsverträge oder einer eigenen Stromerzeugungseinrichtung 8 ist ohne weiteres möglich.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| 1 | Anlage |
| 2 | Versorgungsnetz |
| 3 | Umrichter |
| 4 | Elektrolyseanlage |
| 5 | Gleichrichter |
| 6 | Energiespeicher |
| 6a, 6b | Teilspeicher |
| 7 | Wasserstoffspeicher |
| 8 | Stromerzeugungseinrichtung |
| 9 | Steuereinrichtung |
| 10 | Steuerprogramm |
| 11 | Maschinencode |
| 12 | Bedienperson |
| 13 | Internet |
| 14 | Energiebörse |

| Ai | Anforderungen |
| B1, B4, B6, B7, B8 | erste Betriebsweisen |
| B1', B4', B6', B7', B8' | zweite Betriebsweisen |

| Ci | Bedingungen |
|---|---|
| E1, E2 | zeitliche Verläufe |
| G | Abstiegsrichtung |
| G1, G2 | Gradienten |
| k | Faktor |
| K1, K2 | Kostenfunktionen |
| KA, KE, KV, KW | Kosten |
| Mi | Mengen an elektrischer Energie |
| NB | Nebenbedingungen |
| Ri | Antworten |
| S1 bis S75 | Schritte |
| T1, T2 | Zeithorizonte |
| t0, t1, t2 | Zeitpunkte |
| Z, Z1, Z4, Z6, Z7, Z8 | Anfangszustände |
| Z', Z1', Z4', Z6', Z7', Z8' | Endzustände |
| ZL | Ladezustand |

**Patentansprüche**

1. Betriebsverfahren für ein Gesamtsystem,

- wobei das Gesamtsystem als ein Teilsystem einen elektrischen Energiespeicher (6) und weitere Teilsysteme (1, 4, 7, 8) umfasst,
- wobei die weiteren Teilsysteme (1, 4, 7, 8) eine Anlage (1) der Metallindustrie umfassen,
- wobei die Anlage (1) der Metallindustrie und der elektrische Energiespeicher (6) zur Übertragung elektrischer Energie direkt oder indirekt miteinander und mit einem elektrischen Versorgungsnetz (2) verbunden sind,
- wobei einer das Gesamtsystem steuernden Steuereinrichtung (9) vor dem Beginn eines ersten Zeithorizonts (T1) Anfangszustände (Z1, Z4, Z6, Z7, Z8) der Teilsysteme (1, 4, 6, 7, 8) bekannt sind, welche für die Teilsysteme (1, 4, 6, 7, 8) zu Beginn des ersten Zeithorizonts (T1) zu erwarten sind,
- wobei der Steuereinrichtung (9) vor dem Beginn des ersten Zeithorizonts (T1) für den ersten Zeithorizont (T1) ein geplanter erster zeitlicher Verlauf (E1) des Bezugs an elektrischer Energie aus dem Versorgungsnetz (2) und geplante erste Betriebsweisen (B1, B4, B7, B8) der weiteren Teilsysteme (1, 4, 7, 8) bekannt sind,
- wobei die Steuereinrichtung (9) basierend auf dem Anfangszustand (Z6) des elektrischen Energiespeichers (6), dem geplanten ersten zeitlichen Verlauf (E1) des Bezugs an elektrischer Energie und den geplanten ersten Betriebsweisen (B1, B4, B7, B8) der weiteren Teilsysteme (1, 4, 7, 8) einen für das Ende des ersten Zeithorizonts (T1) erwarteten Endzustand (Z6') des elektrischen Energiespeichers (6) ermittelt,
- wobei die Steuereinrichtung (9), ausgehend vom erwarteten Endzustand (Z6') des elektrischen Energiespeichers (6) und der Steuereinrichtung (9) bekannter, für einen sich an den ersten Zeithorizont (T1) unmittelbar anschließenden zweiten Zeithorizont (T2) geplanter zweiter Betriebsweisen (B1', B4', B7', B8') der weiteren Teilsysteme (1, 4, 7, 8) für den zweiten Zeithorizont (T2) mögliche zweite zeitliche Verläufe (E2) des Bezugs an elektrischer Energie ermittelt,
- wobei die Steuereinrichtung (9) die möglichen zweiten zeitlichen Verläufe (E2) des Bezugs an elektrischer Energie derart ermittelt, dass sie jeweils bezüglich einer Mehrzahl von vom jeweiligen zweiten zeitlichen Verlauf (E2) des Bezugs an elektrischer Energie abhängigen jeweiligen Kostenfunktionen (K1, K2) pareto-optimal sind,
- wobei die Abhängigkeiten der Kostenfunktionen (K1, K2) vom jeweiligen zweiten zeitlichen Verlauf (E2) des Bezugs an elektrischer Energie von Kostenfunktion (K1, K2) zu Kostenfunktion (K2, K2) unterschiedlich sind,
- wobei die Steuereinrichtung (9) einen der ermittelten möglichen zweiten zeitlichen Verläufe (E2) des Bezugs an elektrischer Energie für den zweiten Zeithorizont (T2) als zweiten zeitlichen Verlauf (E2) des Bezugs an elektrischer Energie festlegt,
- wobei die Steuereinrichtung (9) die Festlegung des zweiten zeitlichen Verlaufs (E2) des Bezugs an elektrischer Energie vor dem Beginn des ersten Zeithorizonts (T1) vornimmt,
- wobei die Steuereinrichtung (9), soweit möglich, während des ersten und des zweiten Zeithorizonts (T1, T2) die weiteren Teilsysteme (1, 4, 7, 8) basierend auf den geplanten ersten und zweiten Betriebsweisen (B1, B4, B7, B8, B1', B4', B7', B8') betreibt und den elektrischen Energiespeicher (6) derart betreibt, dass sich der Bezug an elektrischer Energie aus dem Versorgungsnetz (2) während des ersten und zweiten Zeithorizonts (T1, T2) gemäß des geplanten ersten und des festgelegten zweiten zeitlichen Verlaufs (E1, E2) des Bezugs an elektrischer Energie ergibt.

**2.** Betriebsverfahren nach Anspruch 1,
**dadurch gekennzeichnet,**
**dass** die Kostenfunktionen (K1, K2) eine erste Kostenfunktion (K1) umfassen, deren Wert von Kosten des Betriebs des elektrischen Energiespeichers (6) während des zweiten Zeithorizonts (T2) ohne Berücksichtigung von Kosten (KE) für den Bezug an elektrischer Energie abhängig ist.

**3.** Betriebsverfahren nach Anspruch 2,
**dadurch gekennzeichnet,**
**dass** die Steuereinrichtung (9) zum Festlegen des zweiten zeitlichen Verlaufs (E2) des Bezugs an elektrischer Energie

- über das Internet (13) an einer Energiebörse (14) für eine Anzahl von Abschnitten des zweiten Zeithorizonts (T2) jeweils eine Anzahl an Anforderungen (Ai) für den Bezug jeweiliger Mengen (Mi) an elektrischer Energie abgibt, wobei den Anforderungen (Ai) jeweilige Bedingungen (Ci) zugeordnet sind,
- prüft, ob und gegebenenfalls für welche der Anforderungen (Ai) der angeforderte Bezug an elektrischer Energie unter Erfüllung der jeweils zugeordneten Bedingungen (Ci) von der Energiebörse (14) zugesagt wird, und
- sodann den zweiten zeitlichen Verlauf (E2) des Bezugs an elektrischer Energie unter Berücksichtigung derjenigen Anforderungen (Ai) bestimmt, bei denen der gewünschte Bezug an elektrischer Energie unter Erfüllung der jeweils zugeordneten Bedingungen (Ci) von der Energiebörse (14) zugesagt wird.

**4.** Betriebsverfahren nach Anspruch 1,
**dadurch gekennzeichnet,**
**dass** die Kostenfunktionen (K1, K2) eine erste Kostenfunktion (K1) umfassen, deren Wert von Kosten des Betriebs des elektrischen Energiespeichers (6) während des zweiten Zeithorizonts (T2) und Kosten (KE) für den Bezug an elektrischer Energie abhängig ist.

**5.** Betriebsverfahren nach einem der obigen Ansprüche,
**dadurch gekennzeichnet,**
**dass** die Kostenfunktionen (K1, K2) eine zweite Kostenfunktion (K2) umfassen, deren Wert vom zeitlichen Verlauf eines Ladezustands (ZL) des elektrischen Energiespeichers (6) während des zweiten Zeithorizonts (T2) abhängig ist.

**6.** Betriebsverfahren nach einem der obigen Ansprüche,
**dadurch gekennzeichnet,**
**dass** die möglichen zweiten zeitlichen Verläufe (E2) des Bezugs an elektrischer Energie einheitliche Nebenbedingungen (NB) erfüllen.

**7.** Betriebsverfahren nach einem der obigen Ansprüche,
**dadurch gekennzeichnet,**
**dass** die Steuereinrichtung (9) zum Ermitteln eines jeweiligen möglichen zweiten zeitlichen Verlaufs (E2) des Bezugs an elektrischer Energie

- für den zweiten Zeithorizont (T2) einen zweiten zeitlichen Verlauf (E2) des Bezugs an elektrischer Energie ansetzt und für den angesetzten zweiten zeitlichen Verlauf (E2) die Werte der Kostenfunktionen (K1, K2) und die Gradienten (G1, G2) der Kostenfunktionen (K1, K2) ermittelt,
- anhand der Gesamtheit der Gradienten (G1, G2) entscheidet, ob der angesetzte zweite zeitliche Verlauf (E2) pareto-optimierbar ist oder nicht,
- in dem Fall, dass der angesetzte zweite zeitliche Verlauf (E2) nicht pareto-optimierbar ist, den angesetzten zweiten zeitlichen Verlauf (E2) als möglichen zweiten zeitlichen Verlauf (E2) übernimmt und
- in dem Fall, dass der angesetzte zweite zeitliche Verlauf (E2) pareto-optimierbar ist, unter Verwertung der Gradienten (G1, G2) der Kostenfunktionen (K1, K2) eine Abstiegsrichtung (G) ermittelt, den angesetzten zweiten zeitlichen Verlauf (E2) unter Verwertung der Abstiegsrichtung (G) variiert und die Ermittlung der Werte der Kostenfunktionen (K1, K2) und der Gradienten (G1, G2) der Kostenfunktionen sowie das Variieren wiederholt, bis der angesetzte zweite zeitliche Verlauf (E2) pareto-optimal ist, und den angesetzten zweiten zeitlichen Verlauf (E2) dann als möglichen zweiten zeitlichen Verlauf (E2) übernimmt.

**8.** Betriebsverfahren nach einem der obigen Ansprüche,
**dadurch gekennzeichnet,**
**dass** die Steuereinrichtung (9) während des zweiten Zeithorizonts (T2)

- prüft, ob eine von den geplanten zweiten Betriebsweisen (B1', B4', B7', B8') abweichende Betriebsweise der weiteren Teilsysteme (1, 4, 7, 8) erforderlich ist,
- in dem Fall, dass keine abweichende Betriebsweise erforderlich ist, die weiteren Teilsysteme (1, 4, 7, 8) entsprechend den geplanten zweiten Betriebsweisen (B1', B4', B7', B8') betreibt und den elektrischen Energiespeicher (6) derart betreibt, dass sich der Bezug an elektrischer Energie aus dem Versorgungsnetz (2) während des zweiten Zeithorizonts (T2) gemäß des festgelegten zweiten zeitlichen Verlaufs (E2) des Bezugs an elektrischer Energie ergibt,
- in dem Fall, dass eine abweichende Betriebsweise erforderlich ist, die weiteren Teilsysteme (1, 4, 7, 8) gemäß den abweichenden Betriebsweisen betreibt und ermittelt, in welchem Umfang sich dadurch ein der Festlegung des zweiten zeitlichen Verlaufs (E2) des Bezugs an elektrischer Energie zugrunde gelegter Bedarf an elektrischer Energie der weiteren Teilsysteme (1, 4, 7, 8) ändert,
- prüft, ob mittels einer Anpassung des Betriebs des elektrischen Energiespeichers (6) der festgelegte zweite zeitliche Verlauf (E2) des Bezugs an elektrischer Energie beibehalten werden kann,
- in dem Fall, dass der festgelegte zweite zeitliche Verlauf (E2) des Bezugs an elektrischer Energie nicht beibehalten werden kann, den Bezug an elektrischer Energie mit oder ohne Anpassung des Betriebs des elektrischen Energiespeichers (6) ändert, um die abweichende Betriebsweise der weiteren Teilsysteme (1, 4, 7, 8) zu ermöglichen, und
- in dem Fall, dass der festgelegte zweite zeitliche Verlauf (E2) des Bezugs an elektrischer Energie beibehalten werden kann, entscheidet, ob und gegebenenfalls in welchem Umfang sie den Bezug an elektrischer Energie ändert, und den elektrischen Energiespeicher (6) entsprechend betreibt.

9. Betriebsverfahren nach Anspruch 8,
**dadurch gekennzeichnet,**
**dass** die Steuereinrichtung (9) ihre Entscheidung anhand der Art und des Ausmaßes der Änderung des Bedarfs an elektrischer Energie der weiteren Teilsysteme (1, 4, 7, 8), des aktuellen Ladezustands (ZL) des elektrischen Energiespeichers (6), des Fortschritts im zweiten Zeithorizont (T2) und/oder geschätzter Preise für den Bezug an elektrischer Energie während des verbleibenden Teils des zweiten Zeithorizonts (T2) trifft.

10. Betriebsverfahren nach einem der obigen Ansprüche,
**dadurch gekennzeichnet,**

- **dass** es iterativ immer wieder erneut ausgeführt wird,
- **dass** der zweite Zeithorizont (T2) einer jeweiligen Iteration zumindest teilweise Bestandteil des ersten Zeithorizonts (T1) der jeweils nachfolgenden Iteration ist und
- **dass** mindestens eine der Kostenfunktionen (K1, K2) von Iteration zu Iteration individuell bestimmt wird.

11. Steuerprogramm für eine Steuereinrichtung (9) für ein Gesamtsystem,

- wobei das Gesamtsystem als ein Teilsystem einen elektrischen Energiespeicher (6) und weitere Teilsysteme (1, 4, 7, 8) umfasst,
- wobei die weiteren Teilsysteme (1, 4, 7, 8) eine Anlage (1) der Metallindustrie umfassen,
- wobei die Anlage (1) der Metallindustrie und der elektrische Energiespeicher (6) zur Übertragung elektrischer Energie direkt oder indirekt miteinander und mit einem elektrischen Versorgungsnetz (2) verbunden sind,
- wobei das Steuerprogramm (9) Maschinencode (11) umfasst, der von der Steuereinrichtung (9) abarbeitbar ist,
- wobei die Abarbeitung des Maschinencodes (11) durch die Steuereinrichtung (9) bewirkt, dass die Steuereinrichtung (9) das Gesamtsystem gemäß einem Betriebsverfahren nach einem der obigen Ansprüche steuert.

12. Steuereinrichtung für ein Gesamtsystem,

- wobei das Gesamtsystem als ein Teilsystem einen elektrischen Energiespeicher (6) und weitere Teilsysteme (1, 4, 7, 8) umfasst,
- wobei die weiteren Teilsysteme (1, 4, 7, 8) eine Anlage (1) der Metallindustrie umfassen,
- wobei die Anlage (1) der Metallindustrie und der elektrische Energiespeicher (6) zur Übertragung elektrischer Energie direkt oder indirekt miteinander und mit einem elektrischen Versorgungsnetz (2) verbunden sind,
- wobei die Steuereinrichtung mit einem Steuerprogramm (10) nach Anspruch 11 programmiert ist, so dass die Steuereinrichtung bei Abarbeitung des Maschinencodes (11) des Steuerprogramms (10) das Gesamtsystem gemäß einem Betriebsverfahren nach einem der Ansprüche 1 bis 10 steuert.

13. Gesamtsystem,

- wobei das Gesamtsystem als ein Teilsystem einen elektrischen Energiespeicher (6) und weitere Teilsysteme (1, 4, 7, 8) umfasst,
- wobei die weiteren Teilsysteme (1, 4, 7, 8) eine Anlage (1) der Metallindustrie umfassen,
- wobei die Anlage (1) der Metallindustrie und der elektrische Energiespeicher (6) zur Übertragung elektrischer Energie direkt oder indirekt miteinander und mit einem elektrischen Versorgungsnetz (2) verbunden sind,
- wobei das Gesamtsystem eine Steuereinrichtung (9) nach Anspruch 12 umfasst, die bei Abarbeitung des Maschinencodes (11) eines Steuerprogramms (10) von Anspruch 11 das Gesamtsystem gemäß einem Betriebsverfahren nach einem der Ansprüche 1 bis 10 steuert.

# FIG 1

EP 4 498 557 A1

# FIG 2

Z = (Z1, Z4, Z6, Z7, Z8, ...) — S1

(B1, B4, B7, B8, ...); E1 — S2

B6 = f(B1, B4, B7, B8, ..., E1) — S3

(Z' = Z1', Z4', Z6', Z7', Z8', ...) — S4

(B1', B4', B7', B8', ...) — S5

E2 — S6

B6' = f(B1', B4', B7', B8', ..., E2) — S7

S8 — t0? —

+

S9 — B1' → 1; B4' → 4; ...

S10 — t1? —

+

S11 — B1' → 1; B4' → 4; ...

S12 — t2? —

+

S13 —

FIG 3

T1 | T2

(B1, B4, B7, B8, E1)

(B6)

(B1', B4', B7', B8', E2)

t

t0　　　　　　　　　t1　　　　　　　t2

FIG 4

S21　　E2 ⟷ (B1', B4, ...); NB

S22　　K1, K2, ...

S23　　pareto

S24　　◇　−

＋

S25

S26　　E2　　　　　var E2

S27　　◇　−

＋

S28　　E2

# FIG 5

S31 — | E2 |

S32 — | K1, K2, ... |

S33 — | G1, G2, ... |

S34 ◇ —

S34 ◇ +

S35 — | G = f(G1, G2, ...) |

S36 — | E2 = E2 + k · G |

S37 — | K1, K2, ... G1, G2, ... |

S38 ◇ —

S38 ◇ +

S39 — | E2 |

S40 ◇ —

S40 ◇ +

S41 — | E2 |

FIG 6

S51

ok?  —
    +

B1, B4, ...  S52

E1  S53

FIG 7

S61

—

S62  B1, B4, ...

S63

S64

S65  —

S66

E1

S67  —

S69

S68

## FIG 8

$$K1 = f(KV, KA, KW, KE)$$
$$K2 = f(ZL(t))$$

## FIG 9

$$K1 = f(KV, KA, KW)$$
$$K2 = f(ZL(t))$$

## FIG 10

| | |
|---|---|
| $Ai = (Mi, Ci,); i = 1,2, ...$ | S71 |
| $Ai \rightarrow 14$ | S72 |
| $Ri$ | S73 |
| $Ai(Ri)$ | S74 |
| $E2$ | S75 |

FIG 11

Europäisches
Patentamt

European
Patent Office

Office européen
des brevets

## EUROPÄISCHER RECHERCHENBERICHT

Nummer der Anmeldung

EP 23 18 7199

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | ABDULAAL AHMED ET AL: "Two-stage discrete-continuous multi-objective load optimization: An industrial consumer utility approach to demand response", APPLIED ENERGY, Bd. 206, 4. September 2017 (2017-09-04), Seiten 206-221, XP085256529, ISSN: 0306-2619, DOI: 10.1016/J.APENERGY.2017.08.053 * Zusammenfassung * * Abbildung 12 * * Seite 207 – Seite 212 * * Seite 220 – Seite 221 * ----- | 1-13 | INV. H02J3/28 H02J3/32 H02J3/46 |
| A | CN 114 498 690 A (NAT ELECTRIC POWER INNER MONGOLIA NEW ENERGY DEVELOPMENT LIMITED COMPA) 13. Mai 2022 (2022-05-13) * das ganze Dokument * ----- | 1-13 | |

RECHERCHIERTE
SACHGEBIETE (IPC)

H02J
G06Q

Der vorliegende Recherchenbericht wurde für alle Patentansprüche erstellt

| Recherchenort | Abschlußdatum der Recherche | Prüfer |
|---|---|---|
| München | 12. Februar 2024 | Zettler, Karl-Rudolf |

**ANHANG ZUM EUROPÄISCHEN RECHERCHENBERICHT**
**ÜBER DIE EUROPÄISCHE PATENTANMELDUNG NR.** EP 23 18 7199

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-02-2024

| Im Recherchenbericht angeführtes Patentdokument | Datum der Veröffentlichung | Mitglied(er) der Patentfamilie | Datum der Veröffentlichung |
|---|---|---|---|
| CN 114498690 A | 13-05-2022 | KEINE | |

Für nähere Einzelheiten zu diesem Anhang : siehe Amtsblatt des Europäischen Patentamts, Nr.12/82

EPO FORM P0461

28

**EP 4 498 557 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- KR 20190136300 A
- US 10354297 B2
- TW 201235124 A

**In der Beschreibung aufgeführte Nicht-Patentliteratur**

- Grüne Energieversorgung der Stahlindustrie. *Stahl und Eisen*, August 2022, 22-24
- **S. SCHÄFFLER** ; **R. SCHULZ** ; **K. WEINZIERL**. Stochastic Method for the Solution of Unconstrained Vector Optimization Problems. *Journal of Optimization Theory and Applications*, January 2002, vol. 114 (1), 209-222